(19) Europäisches Patentamt
European Patent Office
Office européen des brevets

(11) EP 0 620 262 B1

(12) **EUROPÄISCHE PATENTSCHRIFT**

(45) Veröffentlichungstag und Bekanntmachung des Hinweises auf die Patenterteilung:
**30.07.1997 Patentblatt 1997/31**

(51) Int Cl.[6]: **C09K 19/34**, C09K 19/46, C09K 19/58

(21) Anmeldenummer: **94105020.5**

(22) Anmeldetag: **30.03.1994**

(54) **Smektische Flüssigkristallmischung**

Smectic liquid crystal mixture

Mélange liquide cristallin smectique

(84) Benannte Vertragsstaaten:
**DE FR GB**

(30) Priorität: **10.04.1993 DE 4311968**

(43) Veröffentlichungstag der Anmeldung:
**19.10.1994 Patentblatt 1994/42**

(73) Patentinhaber: **HOECHST AKTIENGESELLSCHAFT**
**65929 Frankfurt am Main (DE)**

(72) Erfinder:
- **Hornung, Barbara**
  **D-63594 Hasselroth (DE)**
- **Jungbauer, Dietmar, Dr.**
  **D-64331 Weiterstadt (DE)**
- **Manero, Javier, Dr.**
  **D-65931 Frankfurt (DE)**

(56) Entgegenhaltungen:
**EP-A- 0 285 395** **EP-A- 0 292 954**
**EP-A- 0 351 746** **EP-A- 0 361 272**
**EP-A- 0 365 820** **EP-A- 0 541 081**
**EP-A- 0 578 054** **EP-A- 0 603 786**
**WO-A-92/12974** **WO-A-93/13093**
**DE-A- 4 116 751**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 620 262 B1

**Beschreibung**

Die Erfindung betrifft eine smektische, insbesondere eine ferroelektrische Flüssigkristallmischung auf Basis von Phenylpyrimidinderivaten.

Flüssigkristalle (LC) haben aufgrund der ungewöhnlichen Kombination von anisotropem und fluidem Verhalten eine Vielzahl von Anwendungsmöglichkeiten in elektrooptischen Schalt- und Anzeigevorrichtungen gefunden.

Neben den seit langem eingesetzten nematischen Flüssigkristallphasen finden in jüngerer Zeit verstärkt auch smektische Flüssigkristallphasen, insbesondere ferroelektrische (FLC), Anwendung.

Für die praktische Verwendung von ferroelektrischen Flüssigkristallen in elektrooptischen Schalt- und Anzeigeelementen werden chirale, geneigt-smektische Phasen, wie $S_C^*$-Phasen, benötigt (siehe z.B. R.B. Meyer, L. Liebert, L. Strzelecki und P. Keller, J. Physique 36, L-69 (1975)), die über einen großen Temperaturbereich stabil sind. Dieses Ziel kann man mit Verbindungen erreichen, die selbst solche Phasen ausbilden, oder aber, indem man nicht chirale, geneigt-smektische Phasen ausbildende Verbindungen mit optisch aktiven Verbindungen dotiert [siehe z.B. M.Brunet, Cl. Williams, Ann. Phys. 3, 237 (1978)].

Schalt- und Anzeigevorrichtungen, die ferroelektrische Flüssigkristall-Mischungen enthalten ("FLC-Lichtventile"), sind beispielsweise aus EP-A 0 032 362 (= US-A 4 367 924) bekannt. LC-Lichtventile sind Vorrichtungen, die z.B. aufgrund elektrischer Beschaltung ihre optischen Transmissionseigenschaften derart ändern, daß durchfallendes - und gegebenenfalls wieder reflektiertes - Licht intensitätsmoduliert wird. Beispiele sind die bekannten Uhren- und Taschenrechneranzeigen oder LC-Displays im Bereich der Bürokommunikation und des Fernsehens. Dazu zählen aber auch optische Verschlüsse ("light shutter"), wie sie z.B. in Kopiermaschinen und Druckern eingesetzt werden. Auch sogenannte "Spatial Light Modulators" sind Anwendungsbereiche von LC-Lichtventilen (siehe Liquid Crystal Device Handbook, Nikkan Kogyo Shimbun, Tokyo, 1989; ISBN 4-526-02590-9C 3054 und darin zitierte Arbeiten).

Die angesprochenen elektrooptischen Schalt- und Anzeigevorrichtungen sind im allgemeinen so aufgebaut, daß die FLC-Schicht beiderseitig von Schichten eingeschlossen ist, die üblicherweise, in dieser Reihenfolge ausgehend von der FLC-Schicht, mindestens eine Orientierungsschicht, Elektroden und eine Begrenzungsscheibe (z.B. aus Glas) sind. Außerdem enthalten sie mindestens einen Polarisator, sofern sie im "guest-host"- oder im reflexiven Modus betrieben werden, oder zwei Polarisatoren, wenn als Modus die transmissive Doppelbrechnung ("birefringence mode") genutzt wird. Die Schalt- und Anzeigeelemente können gegebenenfalls weitere Hilfschichten, wie Diffusionssperr- oder Isolationsschichten, enthalten.

Die oben erwähnten Orientierungsschichten sind üblicherweise geriebene Filme aus organischen Polymeren oder schräg aufgedampftes Siliziumoxid und von Displayhersteller zu Displayhersteller verschieden.

Die Orientierungsschichten bringen bei hinreichend kleinem Abstand der Begrenzungsscheiben die FLC-Moleküle in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle zwei gleichwertige Orientierungen, zwischen denen sie durch pulsartiges Anlegen eines elektrischen Feldes geschaltet werden können.

Um über das gesamte Display eine einheitliche planare Orientierung in der $S_C^*$-Phase zu erreichen ist es vorteilhaft, wenn die Phasenfolge der Flüssigkristallmischung mit abnehmender Temperatur lautet: Isotrop - nematisch - smektisch A - smektisch C (s. z.B. K. Flatischler et. al., Mol. Cryst. Liq. Cryst. 131, 21 (1985); T. Matsumoto et. al., p. 468-470, Proc. of the 6th Int. Display Research Conf., Japan Display, 30. September -2. October 1986, Tokyo, Japan; M. Murakami et. al., ibid. p. 344-347).

Für ferroelektrische (chiral smektische) Flüssigkristallmischungen muß zusätzlich die Bedingung erfüllt sein, daß die Ganghöhe der Helix in der $S_C^*$-Phase genügend groß ist, um die Ausbildung einer Helix im Display zu verhindern, und in der N*-Phase so groß ist, daß sich beim Abkühlprozeß im Display kein verdrillter Zustand, sondern eine homogene nematische Phase ausbildet. Die Ausbildung einer einheitlichen planaren Orientierung im Display ist notwendig, damit ein großer Kontrast erzielt wird.

Das Hin- und Herschalten der Moleküle (und somit Hell- oder Dunkelstellung bei fester Polarisatoreinstellung) erfolgt, wie schon erwähnt, durch pulsartiges Anlegen eines elektrischen Feldes. Aufgrund der Bistabilität der FLC-Moleküle muß Spannung nur für einen Orientierungswechsel anliegen. Eine Unterteilung des Displays in einzelne Bildpunkte erreicht man durch die bekannte Matrixanordnung der Elektroden. Die Elektroden befinden sich in der Regel auf den Innenseiten der Trägerplatten des Displays mit den Zeilen auf der einen und den Spalten auf der anderen Trägerplatte. In den Überkreuzungsbereichen, den Bildpunkten B, wird der zwischen Zeilen und Spalten befindliche Flüssigkristall geschaltet. Eine grundlegende Beschreibung einer Multiplex-Adressierung für FLC-Displays findet sich z.B. in Proc. SID 28/2, 211 (1978) und Ferroelectrics 94, 3 (1989).

Die Schaltzeit T der FLC-Mischung im Display ist umgekehrt proportional zur spontanen Polarisation $P_S$ und liegen im Bereich von µs.

$$T = \frac{\eta}{P_S \cdot E}$$

E = Höhe des angelegten el. Feldes
$\eta$ = Rotationsviskosität

Neben der spontanen Polarisation ist der Tiltwinkel $\theta$, das ist der Winkel zwischen dem n-Direktor, d.h. der mittleren Molekülrichtung, und der Schichtennormalen von großer Bedeutung. Er beeinflußt, zusammen mit der Doppelbrechung $\Delta n$ und der Schichtdicke d, die Helligkeit des Displays nach der Beziehung:

$$T = T_o \sin^2 (4\theta) \cdot \sin^2 \left( \frac{\Delta n \cdot d \cdot \pi}{\lambda} \right)$$

wobei $T_o$ die Intensität und $\lambda$ die Wellenlänge des einfallenden Lichtes ist.

Üblicherweise werden bei Matrixanordnung der Elektroden im Display als Spalten diejenigen Elektroden bezeichnet, die mit informationstragenden Pulsen (auch Spalten- oder Datenpulse genannt) beaufschlagt werden. Die Zeilen werden dann stroboskopartig sequentiell durch elektrische Pulse aktiviert, was die Voraussetzung für eine Informationsübertragung auf die Bildpunkte der Zeilen ist. Eine wichtige Eigenschaft des Displays ist die zum Aufbau bzw. Wechsel eines Bildes notwendige Zeit. Sie sollte für viele Anwendungen möglichst kurz sein.

Da die Zeilen sequentiell adressiert werden, ist es ausschlaggebend, wie lange eine Zeile angesprochen werden muß, um die Information einzulesen. Diese Einschreibzeit ist umso kürzer, je kürzer die zum Schalten des Flüssigkristalls notwendigen Spannungspulse sind. Im allgemeinen ist die maximal zu applizierende Spannung durch die Wahl der Treiber vorgegeben, so daß die zum Schalten notwendige Pulsbreite möglichst klein sein sollte.

In guter Näherung ist das Produkt aus notwendiger Pulsbreite und Spannung (= Pulshöhe) konstant, also unabhängig von der Spannung, so daß die gerade zum Schalten notwendige Pulsfläche (CPA = critical pulse area) eine die Schnelligkeit des Flüssigkristalls gut charakterisierende Größe darstellt. Die CPA sollte möglichst klein sein.

Ferner ist es vorteilhaft, wenn die LC-Mischung im Display einen hohen Margin bei geringem Flicker aufweist (J. Dijon et al., Ferroelectrics 113 (1991) 371).

Unter Margin versteht man den Spannungsbereich bei gegebenem Ansteuerschema, in dem die Pulshöhe liegen muß, damit die LC-Mischung voll durchschaltet. Der Margin wird vom sog. Bias, d.h. dem Verhältnis aus Zeilen- und Datenpulsspannung, beeinflußt. Der Margin sollte möglichst groß sein, um Dicken- bzw. Temperaturschwankungen im Display auszugleichen.

Bei der Multiplexadressierung erfahren die Moleküle der nicht selektierten Zeilen durch die Datenpulse eine Auslenkung aus ihrem Ruhezustand und relaxieren dann wieder. Die dadurch hervorgerufene Helligkeitsschwankung wird als Flicker bezeichnet. Der Flicker führt zu einer Verminderung des Kontrastes.

Rieker et al. [Phys. Rev. Lett. 59, 2658(1987)] haben gezeigt, daß beim Abkühlen aus der isotropen Phase durch die $S_A$-Phase, die $S_C$-Phase in Displays eine sogenannte Chevron-Geometrie ausbildet, d.h., daß die Schichten geknickt sind. Deshalb muß in der oben erwähnten Beziehung zwischen Tiltwinkel und Transmission der effektive Tiltwinkel $\theta_{eff}$ eingesetzt werden.

Der effektive Tiltwinkel ist der Winkel zwischen den Projektionen von smektischer Normalen und optischer Achse des Flüssigkristalls auf die Glasoberfläche der Zelle.

Ein Display kann wahlweise in der sich beim Abkühlvorgang natürlich einstellenden Chevron-Geometrie oder in der sogenannten Quasi-Bookshelf-Geometrie (QBG) betrieben werden, in die der Flüssigkristall durch gezielte Feldbehandlung gebracht werden kann (siehe z.B. H.Rieger et al., SID 91 Digest (Anaheim) 1991, S. 396).

Gute Werte für die Mehrzahl der oben aufgeführten Parameter zu erhalten, ist mit einzelnen Substanzen kaum möglich. Deswegen ist man schon seit längerer Zeit dazu übergegangen, Mischungen verschiedener Substanzen zu verwenden. Solche Mischungen bestehen im allgemeinen aus einer achiralen Grundmischung und optisch aktiven Dotierstoffen.

Die achiralen Basiskomponenten sollen für eine breite, in einem günstigen Temperaturbereich gelegene $S_C$-Phase sorgen. Weiterhin sollte die achirale Grundmischung die Phasenfolge I-N-$S_A$-$S_C$ und einen möglichst niedrigen Schmelzpunkt aufweisen. Die optisch aktiven Dotierstoffe dienen dann zur Induzierung der Ferroelektrizität der Mischung, zur Pitch-Kompensation und zur Anpassung der optischen und dielektrischen Anisotropie.

Es ist bekannt, daß bestimmte Derivate des Phenylpyrimidins, insbesondere 5-Alkyl-2-(4-alkyloxy-phenyl)-pyrimidine, $S_C$-, $S_A$- und N-Phasen ausbilden können (D.Demus und H. Zaschke, "Flüssigkristalle in Tabellen", VEB Deutscher Verlag für Grundstoffindustrie, Leipzig 1974, S. 260-261) und daneben durch Zusatz optisch aktiver Dotierstoffe

in FLC-Mischungen umgewandelt werden können [M.L. Blinov et al., Sow. Phys. Usp., 27(7), 492 (1984); L.A. Beresnew et al., Ferroelectrics, 59 [321]/1 (1984), vorgetragen auf der 5th. Conference of Soc. Countries in Liquid Crystals, Odessa, UDSSR, Oct. 1983; DE-A 35 15 347, EP-A 0 206 228, EP-A 0 225 195]. Weiter ist bekannt, daß tiefere Schmelzpunkte und eine Verbreiterung der gewünschten flüssigkristallinen Phasen durch Mischen mehrerer LC-Verbindungen erreicht werden [ siehe z.B. D.Demus et al., Mol. Cryst. Liq. Cryst. 25, 215(1974); J.W. Goodby, Ferroelectrics 49, 275 (1985)], und daß die Schmelzpunktsdepression umso ausgeprägter ist, je stärker sich die Mischungskomponenten strukturell unterscheiden (siehe z.B. J.S. Dave et al., J. Chem. Soc. 1955, 4305).

Trotz der durch die bisherigen Mischungen erzielten Erfolge bei der Bereitstellung neuer LC-Materialien kann die Entwicklung von LC-Grundmischungen, insbesondere aber auch von FLC-Mischungen, noch in keiner Weise als abgeschlossen betrachtet werden. Die Hersteller von Anzeigenelementen ("displays") sind für die diversen Anwendungsgebiete weiterhin an einem breiten Spektrum verschiedener Mischungen interessiert.

Aufgabe der vorliegenden Erfindung ist deshalb, Kompositionen aus geeigneten Komponenten für nicht-chirale LC-Grundmischungen, vor allem aber auch für FLC-Mischungen, bereitzustellen. Diese Mischungen sollen möglichst viele der vorstehend dargestellten Kriterien erfüllen, insbesondere einen hohen Kontrast, eine gute Orientierung, einen großen Margin, geringen Flicker, einen großen Winkel in der Chevron Geometrie und einen niedrigen Schmelzpunkt bei möglichst hoher $S_C^*/S_A$ Phasenumwandlungstemperatur aufweisen.

Es wurde nun überraschend gefunden, daß smektische Flüssigkristallmischungen, die eine Kombination von Alkoxyphenylpyrimidinen, metasubstituierten Sechsringaromaten und bestimmten mesogenen Carbonaten enthalten, ein besonders günstiges Eigenschaftschaftsprofil für die Verwendung in LC Phasen aufweisen.

Ein Gegenstand der Erfindung ist daher eine smektische Flüssigkristallmischung, bestehend aus

A. mindestens einer Verbindung der Formel (I)

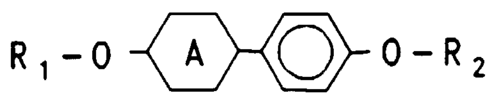 ( I )

worin bedeuten

$R_1$, $R_2$ gleich oder verschieden, eine geradkettige oder verzweigte Alkylgruppe mit 1 bis 18 bzw. 3 bis 18 C-Atomen, wobei eine dem Sauerstoff benachbarte $CH_2$-Gruppe auch durch -CO ersetzt sein kann,

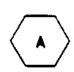 : 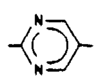 oder 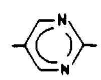

und/oder
mindestens eine Verbindung der Formel (II),

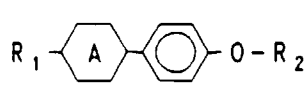 (II)

worin bedeuten:

$R_1$ ,$R_2$ gleich oder verschieden, eine verzweigte oder unverzweigte Alkylgruppe mit 1 bis 18 bzw. 3 bis 18 C-Atomen, wobei eine dem Sauerstoff benachbarte $CH_2$-Gruppe auch durch -CO- ersetzt sein kann;

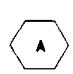 : 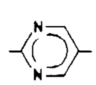 oder 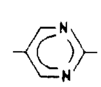

B. mindestens einer Verbindung der Formel (III)

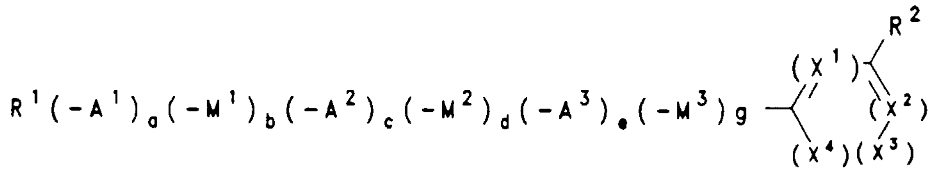 (III)

worin bedeuten:

| | |
|---|---|
| $R^1$, $R^2$ | gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2-$ ersetzt sein können, |
| $A^1$, $A^2$, $A^3$, | gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2,5-diyl, |

und $A^1$ auch

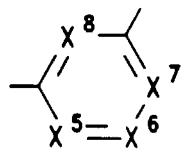

| | |
|---|---|
| $M^1$, $M^2$, $M^3$ | gleich oder verschieden, -O-, -CO-O-, -O-CO-, $-CH_2-O-$, $-O-CH_2-$, $-CH_2-CH_2-$, |
| $X^1$, $X^2$, $X^3$, $X^4$, $X^5$, $X^6$, $X^7$, $X^8$ | CH oder N, wobei die Zahl der N-Atome je Sechsring 0, 1 oder 2 beträgt, |
| a, b, c, d, e, f | sind null oder eins, unter der Bedingung, daß die Summe aus a + c + e 0, 1, 2 oder 3; |

C. Verbindungen der Formel (IV)

$$R^1\text{-O-CO-O-}(\text{-}A^1)_a(\text{-}M^1)_b(\text{-}A^2)_c(\text{-}M^2)_d(\text{-}A^3)_e(\text{-O})_f\text{-}R^2 \qquad \text{(IV)}$$

worin bedeuten

| | |
|---|---|
| $R^1$, $R^2$ | gleich oder verschieden, eine geradkettige oder verzweigte Alkylgruppe mit 1 bis 22 bzw. 3 bis 22 C-Atomen, |
| $A^1$, $A^2$, $A^3$, | gleich oder verschieden, 1,4-Phenylen, wobei auch ein oder zwei H-Atome durch F ersetzt sein können, Pyrimidin-2,5-diyl, wobei auch ein oder zwei H-Atome durch F ersetzt sein können, Pyridin-2,5-diyl, wobei auch ein oder zwei H-Atome durch F ersetzt sein können, |
| $M^1$, $M^2$, | gleich oder verschieden, -O-, -CO-, -CO-O-, -O-CO-, $-CH_2-O-$, $-O-CH_2-$ oder $-CH_2-CH_2-$, |
| a, b, c, d, e , f | null oder eins, unter der Bedingung, daß die Summe a + c + e 1, 2 oder 3 ist; |

sowie mindestens einer Verbindung aus den Gruppen D bis H:
D. Siliziumverbindungen der Formel (V)

$$R^1(\text{-}A^1)_i(\text{-}M^1)_k(\text{-}A^2)_l(\text{-}M^2)_m(\text{-}A^3)_n\text{-}R^2 \qquad \text{(V)}$$

worin bedeuten:

$R^1$ geradkettiges oder verzweigtes Alkyl mit 1 bis 22 bzw. 3 bis 22 C-Atomen, wobei auch eine

oder zwei nicht benachbarte $-CH_2$-Gruppen durch -O-, -CO-, -CO-O-, -O-CO- oder -O-CO-O- ersetzt sein können,

$R^2$ geradkettiges oder verzweigtes Alkyl mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können, mit der Maßgabe, daß eine, nicht an Sauerstoff gebundene, $CH_2$-Gruppe durch $-Si(CH_3)_2$- ersetzt ist,

$A^1$, $A^2$, $A^3$ gleich oder verschieden, 1,4-Phenylen, wobei ein oder zwei H-Atome durch F ersetzt sein können, trans-1,4-Cyclohexylen, Pyridin-2,5-diyl, wobei ein oder zwei H-Atome durch F ersetzt sein können, Pyrimidin-2,5-diyl, wobei ein oder zwei H-Atome jeweils durch F ersetzt sein können, (1,3,4)-Thiadiazol-2,5-diyl,

$M^1$, $M^2$ gleich oder verschieden, -CO-O-, -O-CO-, $-CH_2-O-$, $-O-CH_2-$,

i, k, l, m, n null oder 1, mit der Maßgabe, daß i + l + n = 2 oder 3 ist;

E. Hydrochinonderivate der Formel (VI),

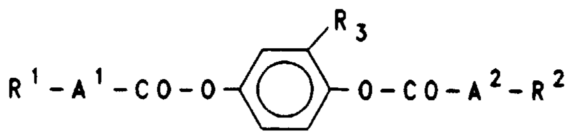

(VI)

worin bedeuten

$R^1$, $R^2$: gleich oder verschieden geradkettiger oder verzweigter Alkylrest mit 1 bzw. 3 bis 16 vorzugsweise 1 bzw. 3 bis 10 C-Atomen, wobei auch eine oder zwei nicht benachbarte $-CH_2$-Gruppen durch -O-, -CO-, -O-CO-, -CO-O-, -O-CO-O-, ersetzt sein können,

$R^3$ $-CH_3$, $CF_3$ oder $-C_2H_5$,

$A^1$, $A^2$ gleich oder verschieden,

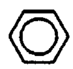 , 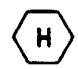 ;

F. Pyridylpyrimidine der Formel (VII)

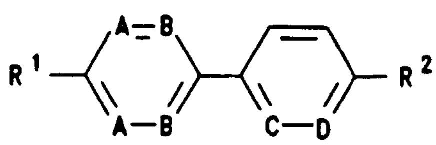

(VII)

wobei bedeuten

A gleich N und B gleich CH oder A gleich CH und B gleich N, C gleich N und D gleich CH oder C gleich CH und D gleich N,

wobei eine oder zwei CH-Gruppen durch CF-Gruppen ersezt sein können,

$R^1$, $R^2$ gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können;

G. Phenylbenzoate der Formel (VIII)

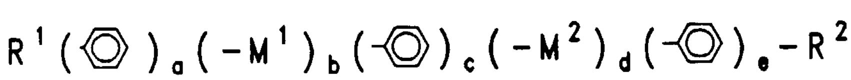

(VIII)

wobei bedeuten

| | |
|---|---|
| $R^1$, $R^2$ | gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können, |
| $M^1$, $M^2$ | gleich oder verschieden, -CO-O-, -O-CO-, |
| a, b, c, d, e | null oder eins, unter der Bedingung, daß a + c + e = 2 oder 3 und b + d = 1 oder 2; |

H. Verbindungen der Formel (IX)

$$R^1(-A^1)_a(-M^1)_b(-A^2)_c(-M^2)_d(-A^3)_e(-M^3)_f(-A^4)\text{-H} \qquad (IX)$$

wobei bedeuten:

| | |
|---|---|
| $R^1$ : | geradkettiger oder verzweigter Alkylrest mit 1 bis 22 bzw. 3 bis 22 C-Atomen, wobei auch eine oder zwei nicht benachbarte $-CH_2$ Gruppen durch -O-, -CO-, -CO-O-, -O-CO-, -O-CO-O- oder $-Si(CH_3)_2$-ersetzt sein können. |
| $A^1$, $A^2$, $A^3$, $A^4$ | gleich oder verschieden, 1,4-Phenylen wobei ein oder zwei H-Atome durch F oder CN ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, (1,3,4)-Thiadiazol-2,5-diyl oder Naphthalin-2,6-diyl, |
| $M^1$, $M^2$, $M^3$ | gleich oder verschieden, -CO-O-, -O-CO-, $-CH_2$-O-, $-O-CH_2$-, oder $-CH_2-CH_2$- |
| a, b, c, d, e, f | null oder eins, unter der Bedingung, daß die Summe aus a + c + e 0, 1, 2 oder 3 ist. |

Die erfindungsgemäßen Flüssigkristallmischungen weisen niedrige Schmelzpunkte, breite $S_C$-Phasen und einen hohen $S_C/S_A$ Phasenübergang auf. Erfindungsgemäße ferroelektrische Flüssigkristallmischungen zeigen eine gute Orientierung, einen großen Margin, geringen Flicker und einen großen Winkel in der Chevron Geometrie.

Bevorzugt als Komponente A sind Verbindungen der Formel (I) und/oder (II), worin bedeuten:

$R^1$, $R^2$: gleich oder verschieden eine geradkettige oder verzweigte Alkylgruppe mit 1 bis 12 bzw. 3 bis 12 C-Atomen, wobei eine dem Sauerstoff benachbarte $CH_2$-Gruppe auch durch -CO- ersetzt sein kann,

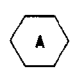 : 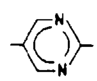

Bevorzugt als Komponente B sind Verbindungen der Formel (III), worin bedeuten:

| | |
|---|---|
| $R^1$, $R^2$ | gleich oder verschieden, geradkettiger Alkylrest mit 1 bis 14 C-Atomen, wobei auch eine oder zwei nicht benachbarte $-CH_2$ Gruppen durch -O-, -CO-, -CO-O-, -O-CO-, -O-CO-O- oder $-Si(CH_3)_2$-ersetzt sein können, |
| $A^1$, $A^2$, $A^3$ | gleich oder verschieden, 1,4-Phenylen, Pyrimidin-2,5-diyl, wobei auch ein oder zwei H-Atome durch F ersetzt sein können, trans-1,4-Cyclohexylen, (1,3,4)-Thiadiazol-2,5-diyl. |

Bevorzugt als Komponente C sind Verbindungen der Formel (IV), worin bedeuten:

| | |
|---|---|
| $R^1$, $R^2$ | gleich oder verschieden, geradkettiger Alkylrest mit 1 bis 14 C-Atomen, wobei auch eine oder zwei nicht benachbarte $-CH_2$ Gruppen durch -O-, -CO-, -CO-O-, -O-CO-, -O-CO-O- oder $-Si(CH_3)_2$-ersetzt sein können, |
| $A^1$, $A^2$, $A^3$ | gleich oder verschieden, 1,4-Phenylen, Pyrimidin-2,5-diyl, wobei auch ein oder zwei H-Atome durch F ersetzt sein können, trans-1 ,4-Cyclohexylen, (1,3,4)-Thiadiazol-2, 5-diyl. |

Bevorzugte Verbindungen aus der Gruppe D sind solche der Formel (V), worin bedeuten:

$R^1$ eine geradkettige oder verzweigte Alkylgruppe mit 1 bis 12 bzw. 3 bis 12 C-Atomen, wobei auch eine oder zwei nicht benachbarte $CH_2$-Gruppen durch -O-, -CO-O-, -O-CO- ersetzt sein können,

$R^2$ eine geradkettige oder verzweigte Alkylgruppe mit 1 bis 12 bzw. 3 bis 12 C-Atomen, wobei auch eine oder zwei nicht benachbarte $CH_2$-Gruppen durch -O-, -CO-O-, -O-CO- ersetzt sein können, wobei eine nicht an Sauerstoff gebundene $CH_2$-Gruppe durch $-Si(CH_3)_2$-ersetzt ist.

Bevorzugte Verbindungen aus der Gruppe E sind solche der Formel (VI), worin bedeuten

$R^1$, $R^2$, gleich oder verschieden, eine geradkettige oder verzweigte Alkylgruppe mit 1 bis 10 bzw. 3 bis 10 C-Atomen, wobei auch eine $CH_2$-Gruppe durch -O-, -CO-O-, -O-CO- oder -O-CO-O- ersetzt sein kann,

$R^3$ $CH_3$, $CF_3$.

Bevorzugte Verbindungen aus der Gruppe F sind solche der Formel (VII), in denen bedeuten

$R^1$, $R^2$ gleich oder verschieden, eine geradkettige oder verzweigte Alkylgruppe mit 1 bis 14 bzw. 3 bis 14 C-Atomen, wobei auch eine oder zwei nicht benachbarte $-CH_2$-Gruppen durch -O-, -CO-, -CO-O-, -O-CO- oder -O-CO-O- ersetzt sein können.

Bevorzugte Verbindungen aus der Gruppe G sind solche der Formel (VIII) mit $R^1$,$R^2$ gleich oder verschieden, geradkettiger Alkylrest mit 1 bis 14 C-Atomen, wobei auch eine oder zwei nicht benachbarte $-CH_2$-Gruppen durch -O-, -CO-, -CO-O-, -O-CO- oder -O-CO-O- ersetzt sein können.

Bevorzugte Verbindungen aus der Gruppe H sind solche der Formel (IX) worin bedeuten

$R^1$ geradkettiger Alkylrest mit 1 bis 14 C-Atomen, wobei auch eine oder zwei nicht benachbarte $-CH_2$-Gruppen durch -O-, -CO-, -CO-O-, -O-CO-, -O-CO-O- oder $-Si(CH_3)_2$- ersetzt sein können,

$A^1$, $A^2$, $A^3$, $A^4$ gleich oder verschieden, 1,4-Phenylen, Pyrimidin-2,5-diyl, wobei auch ein oder zwei H-Atome durch F ersetzt sein können, trans-1,4-Cyclohexylen, (1,3,4)-Thiadiazol-2,5-diyl.

Weiterhin Gegenstand der Erfindung ist eine ferroelektrische Flüssigkristallmischung, bestehend aus

a) mindestens je einer Verbindung aus den Gruppen A, B und C;
b) mindestens einer Verbindung aus den Gruppen D bis H;
c) mindestens zwei Verbindungen aus den Gruppen I bis M;
d) mindestens eine Verbindung aus der Gruppe N

I.) Optisch aktive Phenylbenzoate der Formel (X)

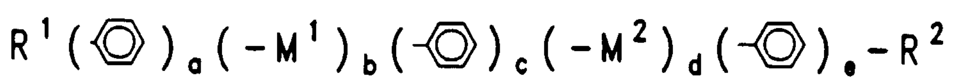

(X)

wobei bedeuten

$R^1$, $R^2$ gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können, und worin wenigstens einer der Reste $R^1$, $R^2$ eine verzweigte, optisch aktive Alkylgruppe ist,

$M^1$, $M^2$, gleich oder verschieden, -CO-O-, -O-CO- oder Einfachbindung

a, b, c, d, e sind null oder eins, unter der Bedingung, daß a + c + e 2 oder 3 ist und b+d 1 oder 2.

J. Optisch aktive Oxiranether der Formel (XI)

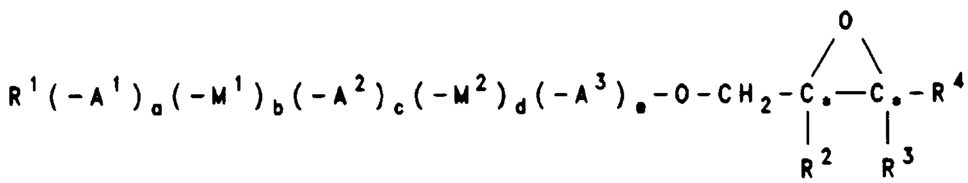 (XI)

wobei die Symbole und Indizes folgende Bedeutung haben

| | |
|---|---|
| * | chirales Zentrum |
| $R^1$ | ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2-$ ersetzt sein können, |

oder die nachfolgende, optisch aktive Gruppe,

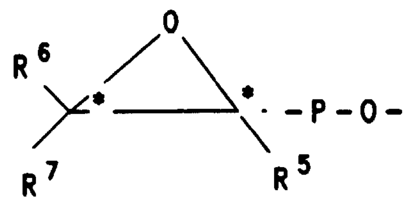

| | |
|---|---|
| $R^2$,$R^3$,$R^4$,$R^5$,$R^6$,$R^7$ | gleich oder verschieden, H oder ein geradkettiger oder verzweigter Alkylrest mit 1 bis 16 bzw. 3 bis 16 C-Atomen, |
| P | $-CH_2-$ oder -CO-, |
| $A^1$, $A^2$, $A^3$ | gleich oder verschieden, 1,4-Phenylen wobei ein oder zwei H-Atome durch F ersetzt sein können, Pyridin-2,5-diyl, wobei ein oder zwei H-Atome jeweils durch F ersetzt sein können, Pyrimidin-2,5-diyl, wobei ein oder zwei H-Atome durch F ersetzt sein können, trans-1,4-Cyclohexylen, bei dem ein oder zwei H-Atome durch -CN und/oder $-CH_3$ ersetzt sein können, (1,3,4)-Thiadiazol-2,5-diyl, |
| $M^1$, $M^2$ | gleich oder verschieden, -CO-O-, -O-CO-, $-CH_2-O-$, $-O-CH_2-$, $-CH_2-CH_2-$, |
| a, b, c, d, e | null oder eins; |

K. optisch aktive Oxiranester der Formel (XII)

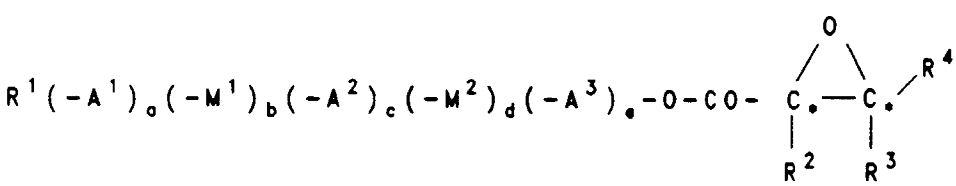 (XII)

wobei die Symbole und Indizes folgende Bedeutung haben

| | |
|---|---|
| * | chirales Zentrum |
| $R^1$ | ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2$-ersetzt sein können, |
| $R^2$,$R^3$,$R^4$ | gleich oder verschieden, H oder ein geradkettiger oder verzweigter Alkylrest mit 1 bis 16 C-Atomen, |
| $A^1$, $A^2$, $A^3$ | gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, |

wobei ein oder zwei H-Atome durch -CN und/oder $-CH_3$ ersetzt sein können, (1,3,4)-Thiadiazol-2,5-diyl,

$M^1$, $M^2$ gleich oder verschieden, -CO-O-, -O-CO-, $-CH_2-O-$, $-O-CH_2-$, $-CH_2-CH_2-$,

a, b, c, d, e null oder eins,

L. optisch aktive Dioxolanether der Formel (XIII),

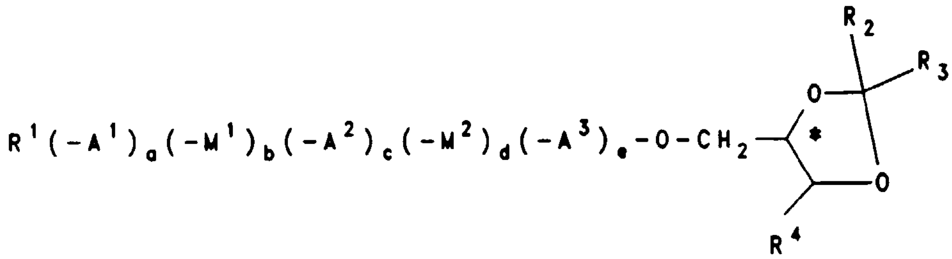

(XIII)

wobei die Symbole und Indizes folgende Bedeutung haben

* chirales Zentrum

$R^1$ ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2$-ersetzt sein können,

$R^2$, $R^3$,$R^4$ gleich oder verschieden, H oder ein geradkettiger oder verzweigter Alkylrest mit 1 bis 16 C-Atomen, wobei $R^2$ und $R^3$ zusammen auch $-(CH_2)_5$ sein können,

$A^1$, $A^2$, $A^3$, gleich oder verschieden, 1,4-Phenylen, wobei ein oder zwei H-Atome durch F ersetzt sein können, Pyridin-2,5-diyl wobei ein oder zwei H-Atome durch F ersetzt sein können, Pyrimidin-2,5-diyl, wobei ein oder zwei H-Atome durch F ersetzt sein können, trans-1,4-Cyclohexylen, bei dem ein oder zwei H-Atome durch -CN und/oder $-CH_3$ ersetzt sein können, (1,3,4)-Thiadiazol-2,5-diyl,

$M^1$, $M^2$ gleich oder verschieden, -CO-O-, -O-CO-, $-CH_2-O-$, $-O-CH_2-$, $-CH_2-CH_2-$,

a, b, c, d, e null oder eins;

M. Optisch aktive Dioxolanester der Formel (XIV)

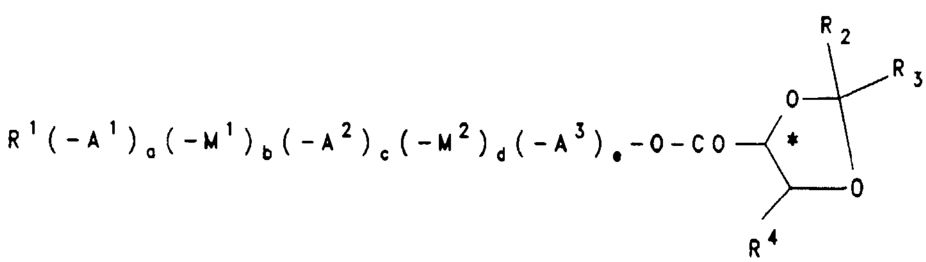

(XIV)

in der bedeuten:

$R^1$ geradkettiger oder verzweigter Alkylrest mit 1 bis 16 C-Atomen, wobei eine oder mehrere nicht benachbarte $-CH_2$ Gruppen durch -O-, -CO-, -O-CO- oder -CO-O- ersetzt sein können,

$R^2$, $R^3$, $R^4$ gleich oder verschieden, H oder ein geradkettiger Alkylrest mit 1 bis 16 C-Atomen, wobei $R^2$ und $R^3$ zusammen auch $-(CH_2)_5-$ sein können;

$A^1$, $A^2$, $A^3$ gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2,5-diyl,

$M^1$, $M^2$ gleich oder verschieden, -CO-O-, -O-CO-, $-CH_2-O-$, $-O-CH_2-$, $-CH_2-CH_2-$,

a, b, c, d, e null oder eins;

N. Makrocyclische Verbindungen der Formel (XV)

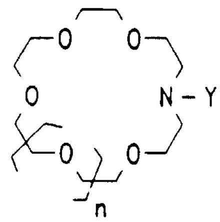

(XV)

mit

n : 0, 1
Y:-CO-(t-Butyl),-CO-(Adamantyl)

Alle asymmetrischen Kohlenstoffatome in den optisch aktiven Verbindungen aus den Gruppen I bis M können, gleich oder verschieden, (R) oder (S) konfiguiert sein.

Es zeigt sich, daß die erfindungsgemäßen Mischungen die obengenannten Anforderungen an FLC-Mischungen besonders gut erfüllen, insbesondere zeigen sie kurze Schaltzeiten, einen besonders großen Margin und sehr gute Orientierbarkeit. Die Mischungen lassen sich nicht nur sehr gut in der Chevron Geometrie betreiben, sondern sind zusätzlich auch für eine Feldbehandlung geeignet, d.h. zum Betrieb in der Quasi-Bookshelf-Geometrie (QBG).

Bevorzugte Verbindungen aus der Gruppe I sind solche der Formel (X), worin bedeuten

$R^1$, $R^2$ gleich oder verschieden, ein geradkettiger oder verzweigter Alkylrest mit 1 bis 16 bzw. 3- bis 16 C-Atomen, wobei auch eine $-CH_2$-Gruppe durch -O-, -CO-O- oder -O-CO-, ersetzt sein kann, und worin wenigstens einer der Reste $R^1$, $R^2$ eine verzweigte, optisch aktive Alkylgruppe ist.

Bevorzugte Verbindungen aus der Gruppe J sind solche der Formel (XI), worin bedeuten

$R^1$ geradkettiger Alkylrest mit 1 bis 14 C-Atomen, wobei auch eine oder zwei nicht benachbarte $-CH_2$-Gruppen durch -O-, -CO-, -CO-O-, -O-CO-, O-CO-O- oder $-Si(CH_3)_2-$ ersetzt sein können, oder die chirale Gruppe

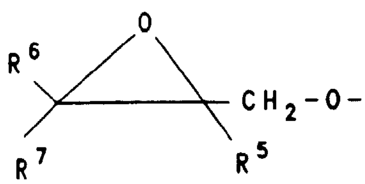

$R^2 = R^5$, $R^3 = R^6$, $R^4 = R^7$ gleich oder verschieden, ein geradkettiger Alkylrest mit 1 bis 6 C-Atomen,
$A^1$, $A^2$, $A^3$ gleich oder verschieden, 1,4-Phenylen, Pyrimidin-2,5-diyl, wobei ein oder zwei H-Atome durch F ersetzt sein können, trans-1,4-Cyclohexylen, (1,3,4)-Thiadiazol-2,5-diyl.

Bevorzugte Verbindungen aus der Gruppe K sind solche der Formel (XII), worin bedeuten

$R^1$ geradkettiger Alkylrest mit 1 bis 14 C-Atomen, wobei auch eine oder zwei nicht benachbarte $-CH_2$-Gruppen durch -O-, -CO-, -CO-O-, -O-CO-, -O-CO-O- oder $-Si(CH_3)_2-$ ersetzt sein können,
$R^2$, $R^3$, $R^4$ gleich oder verschieden, H oder ein geradkettiger Alkylrest mit 1 bis 6 C-Atomen,
$A^1$, $A^2$, $A^3$ gleich oder verschieden, 1,4-Phenylen, Pyrimidin-2,5-diyl, wobei ein oder zwei H-Atome durch F ersetzt sein können, trans-1,4-Cyclohexylen, (1,3,4)-Thiadiazol-2,5-diyl.

Bevorzugte Verbindungen aus der Gruppe L sind solche der Formel (XIII), worin bedeuten

$R^1$ geradkettiger Alkylrest mit 1 bis 14 C-Atomen, wobei auch eine oder zwei nicht benachbarte $-CH_2$-

Gruppen durch -O-, -CO-, -CO-O-, -O-CO-, -O-CO-O- oder -$Si(CH_3)_2$- ersetzt sein können,

$R^2$, $R^3$ $CH_3$ oder zusammen -$(CH_2)_5$,

$R^4$ H,

$A^1$, $A^2$, $A^3$ gleich oder verschieden, 1,4-Phenylen, Pyrimidin-2,5-diyl, wobei ein oder zwei H-Atome durch F ersetzt sein können, trans-1,4-Cyclohexylen, (1,3,4)-Thiadiazol-2,5-diyl,

Bevorzugte Verbindungen aus der Gruppe M sind solche der Formel (XIV), worin bedeuten

$R^1$ geradkettiger Alkylrest mit 1 bis 14 C-Atomen, wobei auch eine -$CH_2$-Gruppe durch -O-, -CO-O-, -O-CO- oder -O-CO-O- ersetzt sein kann,

$R^2$, $R^3$ $CH_3$ oder zusammen -$(CH_2)_5$- ,

$R^4$ H

$A^1$, $A^2$, $A^3$ gleich oder verschieden, 1,4-Phenylen, Pyrimidin-2,5-diyl, wobei ein oder zwei H-Atome durch F ersetzt sein können, trans-1,4-Cyclohexylen, (1,3,4)-Thiadiazol-2,5-diyl,

Bevorzugt sind erfindungsgemäße achirale Basismischungen, die neben den Komponenten A, B, C, aus 3 bis 5 der Komponenten D bis H, ganz besonders bevorzugt aus 4 bis 5 der Komponenten D bis H, bestehen.
Insbesondere bevorzugt sind die Komponentenkombinationen:

aa) A + B + C + E
ab) A + B + C + D + E
ac) A + B + C + D + E + F
ad) A + B + C + D + E + F + G
ae) A + B + C + D + E + F + G + H

Die erfindungsgemäßen ferroelektrischen Flüssigkristallmischungen bestehen, neben den Komponenten A, B, C, mindestens aus einer der Komponenten D bis H und der Komponente N vorzugsweise aus drei oder mehr der Komponenten I bis M.

Insbesondere bevorzugt sind die Kombinationen:

ba) N + J
bb) N + I + J + K + L + M
bc) N + J + K + L
bd) N + J + K + L + M
be) N + J + K + M

Vorzugsweise enthalten die erfindungsgemäßen Mischungen folgende Gewichtsmengen der angegebenen Komponenten:

[Die Prozentzahlen sind jeweils Gewichtsprozente, bezogen auf das Gewicht der gesamten Mischung]

A: 10 bis 70 %, vorzugsweise 15 bis 60 %, insbesondere 20 bis 50 %;
B: 2 bis 30 %, vorzugsweise 2 bis 20 %, insbesondere 5 bis 10 %;
C: 1 bis 30 %, vorzugsweise 2 bis 20 %, insbesondere 5 bis 15 %;
D: 0 bis 30 %, vorzugsweise 1 bis 25 %, insbesondere 5 bis 20 %;
E: 0 bis 15 %, vorzugsweise 1 bis 10 %, insbesondere 2 bis 5 %;
F: 0 bis 15 %, vorzugsweise 1 bis 10 %, insbesondere 2 bis 5 %;
G: 0 bis 30 %, vorzugsweise 1 bis 25 %, insbesondere 2 bis 20 %;
H: 0 bis 30 %, vorzugsweise 1 bis 20 %, insbesondere 5 bis 20 %;
I: 0 bis 15 %, vorzugsweise 0 bis 10 %, insbesondere 1 bis 5 %;
J: 0 bis 20 %, vorzugsweise 1 bis 20 %, insbesondere 1 bis 15 %;
K: 0 bis 20 %, vorzugsweise 1 bis 20 %, insbesondere 1 bis 15 %;
L: 0 bis 20 %, vorzugsweise 0,1 bis 15 %, insbesondere 1 bis 10 %;
M: 0 bis 20 %, vorzugsweise 1 bis 15 %, insbesondere 1 bis 10 %;
N: 0 bis 5 %, vorzugsweise 0,1 bis 3 %, insbesondere 0,5 bis 1,5 %;

Die erfindungsgemäßen Mischungen enthalten vorzugsweise 3 bis 30, (ferroelektrische Mischungen 5 bis 30), besonders bevorzugt 5 bis 25, ganz besonders bevorzugt 7 bis 22, insbesondere 10 bis 20 Einzeiverbindungen. Von den Komponenten werden bevorzugt folgende Zahl von Einzelverbindungen eingesetzt:

A: 1-10 Einzelverbindungen, besonders bevorzugt 4-7 Einzelverbindungen;
B: 1-5 Einzelverbindungen, besonders bevorzugt 1-3 Einzelverbindungen;
C: 1-5 Einzelverbindungen, besonders bevorzugt 1-3 Einzelverbindungen;
D: 0-5 Einzelverbindungen, besonders bevorzugt 1-3 Einzelverbindungen;
E: 0-3 Einzelverbindungen, besonders bevorzugt 1-2 Einzelverbindungen;
F: 0-3 Einzelverbindungen, besonders bevorzugt 1-2 Einzelverbindungen;
G: 0-3 Einzelverbindungen, besonders bevorzugt 1-2 Einzelverbindungen;
H: 0-5 Einzelverbindungen, besonders bevorzugt 1-3 Einzelverbindungen;
I: 0-2 Einzelverbindungen, besonders bevorzugt 0-1 Einzelverbindungen;
J: 0-3 Einzelverbindungen, besonders bevorzugt 1-2 Einzelverbindungen;
K: 0-3 Einzelverbindungen, besonders bevorzugt 1-2 Einzelverbindungen;
L: 0-3 Einzelverbindungen, besonders bevorzugt 0-1 Einzelverbindungen;
M: 0-3 Einzelverbindungen, besonders bevorzugt 0-1 Einzelverbindungen;
N: 0-3 Einzelverbindungen, besonders bevorzugt 1 Einzelverbindung.

Neben den Komponenten A bis N können die erfindungsgemäßen Mischungen gegebenenfalls Hilfsstoffe, wie Viskositätsminderer enthalten.

Die einzelnen Komponenten der erfindungsgemäßen Mischungen sind an sich bekannt. Sie sind mit ihrer Darstellung beispielsweise beschrieben in:

A: WO-A 86/06401
B: EP-A 0 578 054
C: US-A 4 874 542
D: EP-A 0 355 008
E: DE-A 4 243 705
F: WO-A 92/12974
G: P. Keller, Ferroelectrics 58 (1984), 3; J.W. Goodby et al., Liquid Crystals and Ordered Fluids, Bd. 4, New York 1984
H: DE-A 4 136 627
I: P. Keller, Ferroelectrics 58 (1984), 3; J.W. Goodby et al., Liquid Crystals and Ordered Fluids, Bd. 4, New York 1984
J: EP-A 0 263 437 (≙ US 4,876,028), DE-A 4 143 139
K: EP-A 0292 954 (≙ US 4,988,459)
L: EP-A 0 351 746
M: EP-A 0 361 272
N: EP-A 0 528 415.

Zur Herstellung der erfindungsgemäßen Mischungen werden beispielsweise die Einzelsubstanzen in der isotropen Phase gerührt und über geeignete Filter von Partikeln und Schwebeteilchen befreit.

Die erfindungsgemäßen Mischungen eignen sich zur Anwendung in allen Bereichen der Optotechnik, beispielsweise in Schalt- und Anzeigeelementen, Lichtventilen, Bauteilen mit NLO-Eigenschaften. Insbesondere eignen sich die erfindungsgemäßen Mischungen dort zum Einsatz, wo die Eigenschaften smektischer Flüssigkristalle genutzt werden.

Da die Mischungen aber im allgemeinen auch nematische Phasen ausbilden ist prinzipiell die Anwendung im Bereich der Nematentechnologie möglich. Achirale Basismischungen können in allen Einsatzgebieten genutzt werden, in denen anisotrope Fluide Anwendung finden, z.B. als Säulenmaterial in der Gaschromatographie.

Erfindungsgemäße ferroelektrische Mischungen werden bevorzugt in den eingangs beschriebenen FLC-Zellen verwendet, die auf Ausnutzung des SSFLC-Effektes (siehe z.B. J.W. Goodby et al., Ferroelectric Liquid Crystals S. 24 ff, Gordon & Breach, Philadelphia 1991) beruhen.

In solchen Zellen werden die erfindungsgemäßen Verbindungen bevorzugt in Kombinationen mit Orientierungsschichten eingesetzt, wie sie beispielsweise in DE-A 42 12 893 oder in der deutschen Patentanmeldung mit dem Titel "Cyclische Strukturelemente enthaltende Silan-Koppler als Orientierungsschichten" vorgeschlagen werden. Dort ist ein Orientierungsfilm für Flüssigkristalle beschrieben, bestehend aus einer quasi monomolekularen Schicht von Verbindungen der Formel

$$C_y - S_p - A_n$$

worin

| | |
|---|---|
| $C_y$ | einen medio- oder makrocyclischen Kohlenstoffring mit 8 oder mehr Ringgliedern, wobei dieser Ring auch anellierte Benzolringe und -O-, -N-, -S-, -Si- und -B- als Heteroatome enthalten kann; |
| $S_p$ | eine Alkylgruppe mit 1 bis 20 Kohlenstoffatomen, bei der eine oder mehrere nicht benachbarte $-CH_2$-Gruppen durch -O-, -S-, -CO-, -O-CO-, -NH-CO-, -O-COO-, -NH-CO-NH-, -NH-CO-O-, $-SO_2-$, $-Si(CH_3)_2-$, -CH = CH- oder -C≡C- ersetzt sein können; |
| $A_n$ | $SiX^1X^2X^3$, wobei |
| $X^1$ | eine Einfachbindung und |
| $X^2$, $X^3$ | gleich oder verschieden eine Einfachbindung, eine Alkyl oder eine Alkoxygruppe ist, |

wobei die Verbindung über die Einfachbindung(en) der Gruppe $A_n$ an eine sauerstoffhaltige Schicht gebunden ist. Ferner sind die Mischungen für Feldbehandlung (d.h. zum Betrieb in der Quasi-Bookshelf-Geometrie (QBG), (siehe z.B. H.Rieger et al., SID 91 Digest (Anaheim) 1991, p. 396) geeignet.

Ebenso sind die erfindungsgemäßen Mischungen geeignet für die Verwendung in ferroelektrischen Flüssigkristallanzeigen, die auf Nutzung des DHF-Effekts oder des PSFLCD-Effekts (Pitch Stabilized Ferroelectric Liquid Crystal Display, auch SBF = Short Pitch Bistable Ferroelectric Effect genannt) beruhen. Der DHF-Effekt wird beispielsweise von B.I. Ostrovski in Advances in Liquid Crystal Research and Applications, Oxford/Budapest, 1980, 469 ff. beschrieben, der PSFLCD-Effekt ist beispielsweise in DE-A 3 920 625 und EP-A 0 405 346 beschrieben. Zur Nutzung dieses Effektes wird im Gegensatz zum SSFLC-Effekt ein flüssigkristallines Material mit einem kurzen $S_C$-Pitch benötigt.

Die Erfindung wird durch die Beispiele näher erläutert:

Beispiele

Zur Bestimmung der elektrooptischen Eigenschaften der Mischungen werden selbstgebaute 1-Pixel-Testzellen mit Orientierungsschichten wie oben beschrieben verwendet. Die Schichtdicke des Flüssigkristalls variiert zwischen 1,5 und 2 μm. Das Füllen der Zellen erfolgt durch Kapillarkräfte in der isotropen Phase, mit oder ohne Vakuum. Die CPA-Messungen werden mit dem in SPIE 1665, Liquid Crystal Materials, Devices and Applications (1992), vorgestellten elektrischen Ansteuerschema mit einem Bias B = 4:1 durchgeführt. Die Marginmessungen wurden mit dem in der gleichen Literaturstelle vorgestellten Ansteuerschema mit einem Bias B = 4:1 durchgeführt, wobei sich der angegebene prozentuale Margin auf die mit gleichem Schema gemessene Schwellenspannung bezieht.

Beispiel 1:

eine Mischung bestehend aus:

Gewichtsanteile

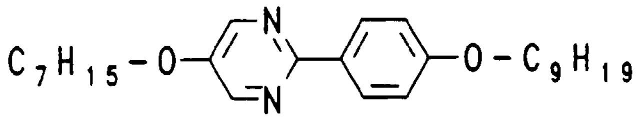

6,29 %

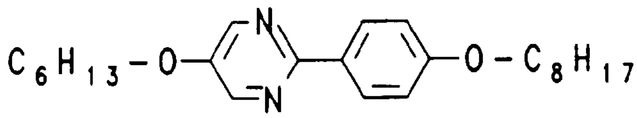

7,11 %

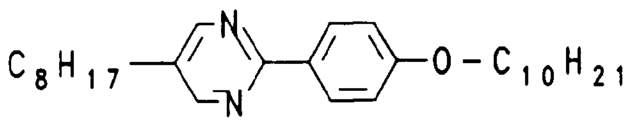

6,87 %

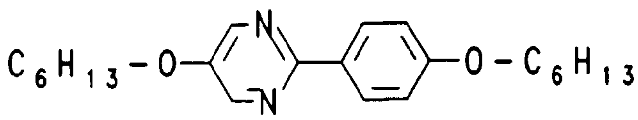

4,94 %

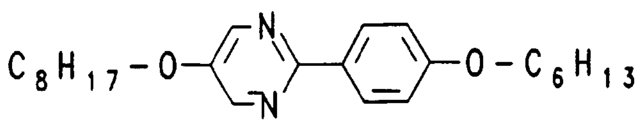

7,11 %

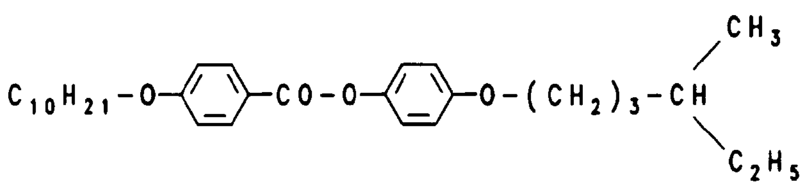

8,66 %

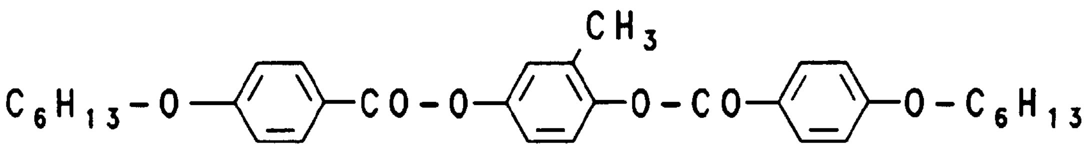

2,46 %

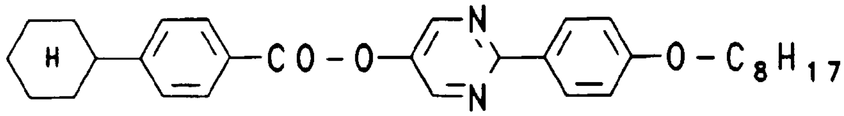

5,61 %

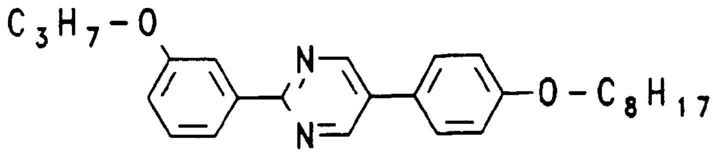

6,77 %

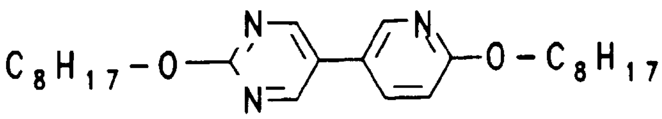

3,83 %

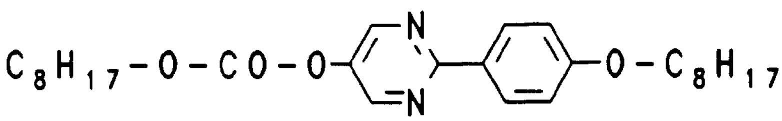

6,33 %

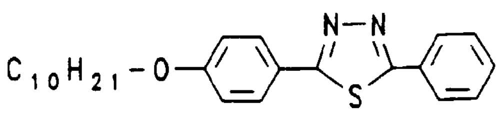

6,38 %

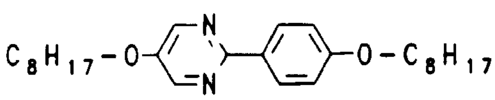

7,63 %

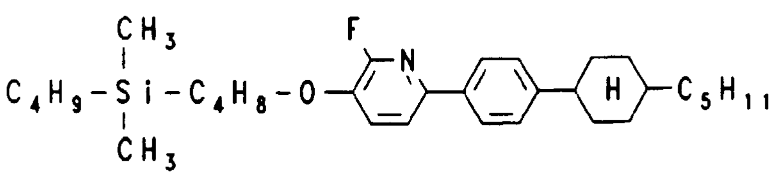

7,09 %

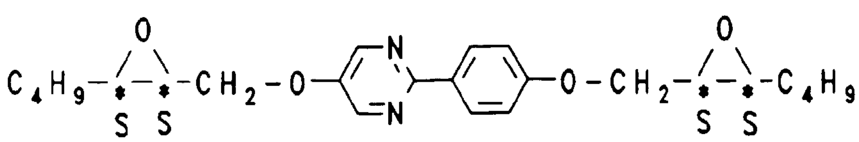

trans

2,92%

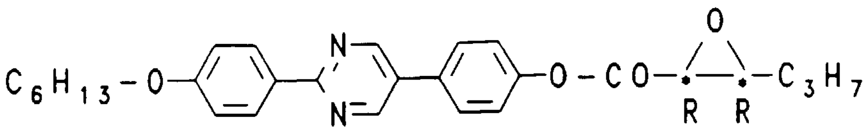

7,16%

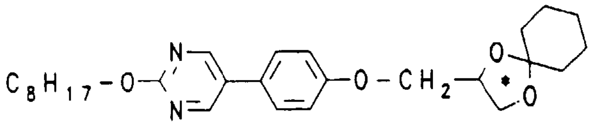

(S)

2,14 %

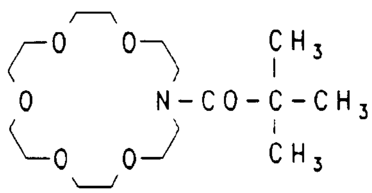

0,70%

zeigt folgende flüssigkristalline Phasenbereiche:

X -35 $S_C^*$ 71 $S_A$ 86 N* 91 I

Die spontane Polarisation beträgt bei 25°C 42 n C/cm$^2$, die kritische Pulsfläche in der Chevron Geometrie 500 Vs/m. Die Mischung schaltet im Multiplexbetrieb mit 79% Margin, besitzt einen effektiven Schaltwinkel $2\Theta_{eff}$ von 25° und hat ein Kontrastverhältnis von 29:1.

In einem weiteren Versuch wird bei 60°C durch Anlegen von Rechteckspannung (15V/µm, 10Hz) eine Quasi-Bookshelf-Geometrie erzeugt. Bei 25°C beträgt die kritische Pulsfläche (CPA) der Mischung in der so vorbehandelten Zelle 700 Vs/m, der effektive Schaltwinkel 2 $\Theta_{eff}$ 40°, das Kontrastverhältnis im Multiplexbetrieb beträgt 30:1 bei einem Margin von 70%.

Beispiel 2:

eine Mischung bestehend aus:

Gewichtsanteile

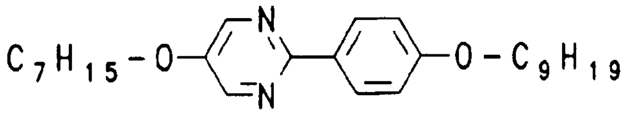

5,68 %

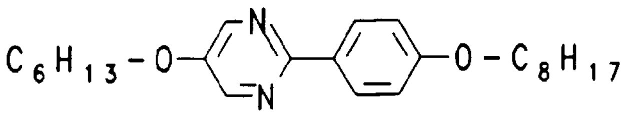

6,41 %

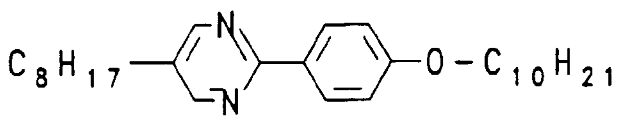

6,20 %

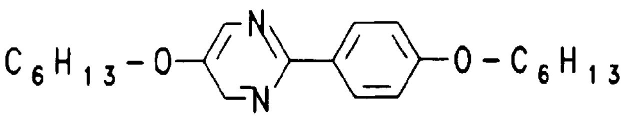

4,46 %

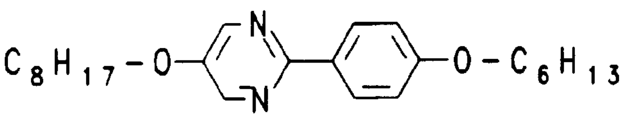

6,41 %

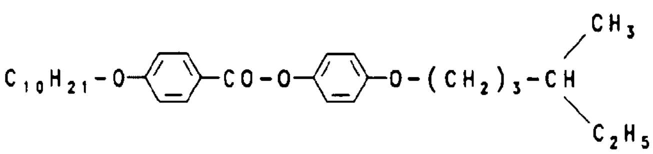

7,81 %

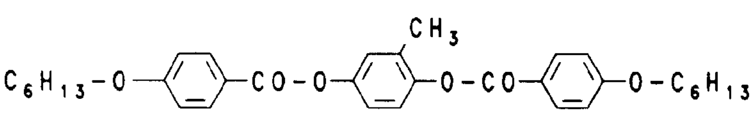

2,22 %

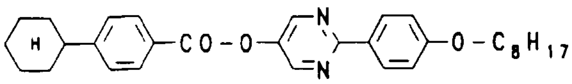

5,06 %

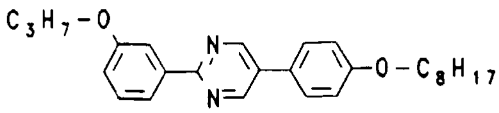

6,11 %

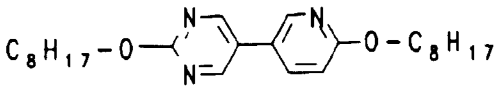

3,44 %

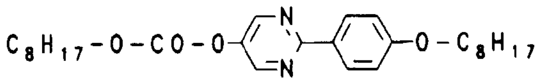

5,71 %

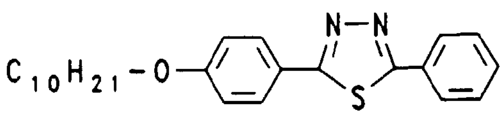

5,76 %

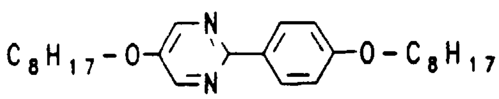

6,88 %

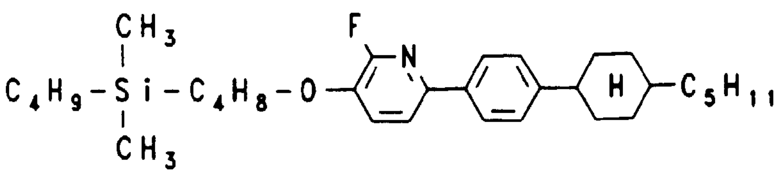

6,45 %

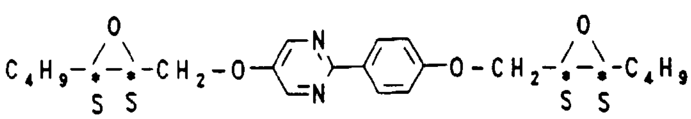

trans

9,46%

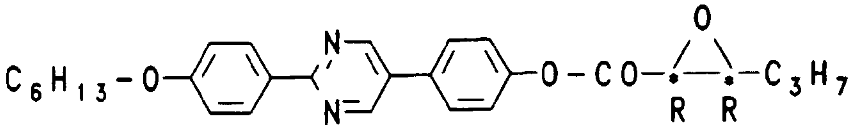

6,40%

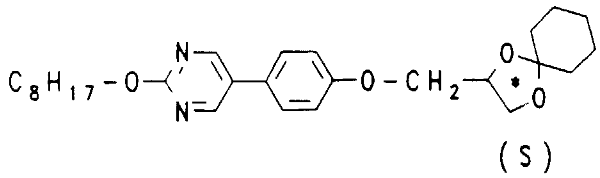 1,92 %

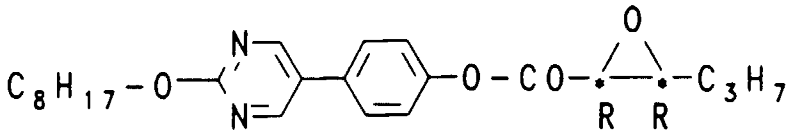 2,98 %

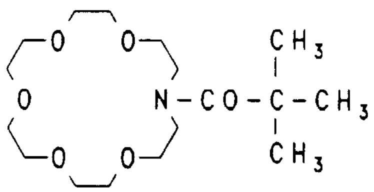 0,64 %

zeigt folgende flüssigkristalline Phasenbereiche:

X -36 $S_C^*$ 73 $S_A$ 85 N* 92 I

Die spontane Polarisation beträgt bei 25°C 88,5 n C/cm², die kritische Pulsfläche (CPA)in der Chevron Geometrie 380 Vs/m. Die Mischung schaltet im Multiplexbetrieb mit 36% Margin, besitzt einen effektiven Schaltwinkel 2 $\Theta_{eff}$ von 28° und hat ein Kontrastverhältnis von 25:1.

Beispiel 3:

eine Mischung bestehend aus:

Gewichtsanteile

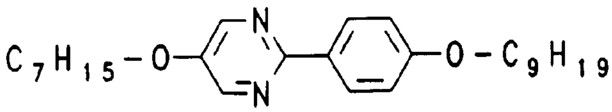

5,91 %

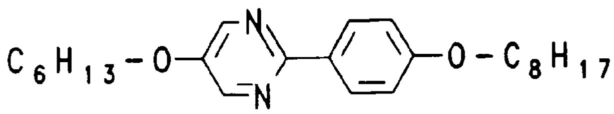

6,67 %

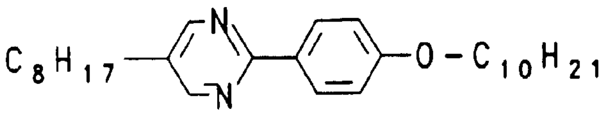

6,43 %

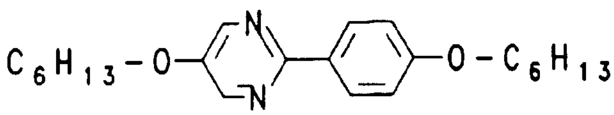

4,60 %

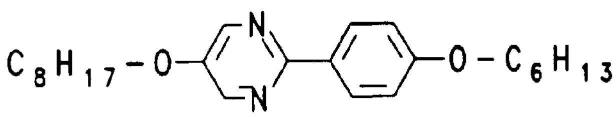

6,67 %

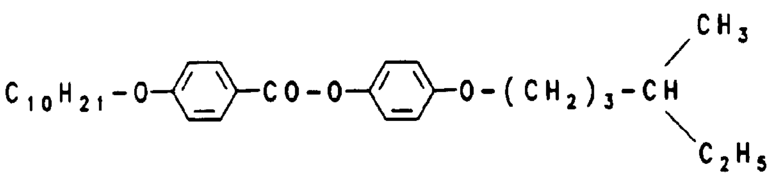

8,84 %

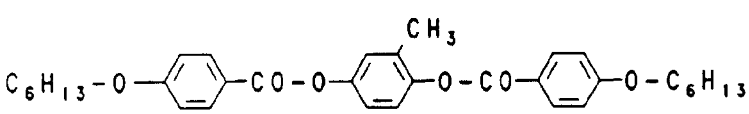

2,34 %

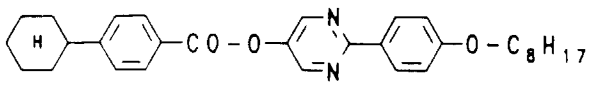

5,38 %

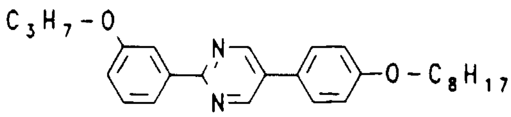

6,49 %

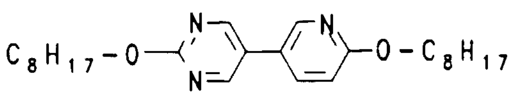

3,67 %

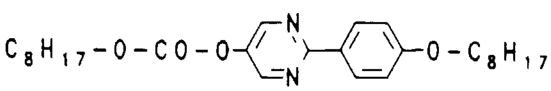

7,09 %

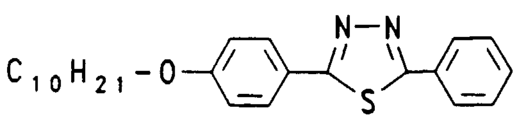

6,12 %

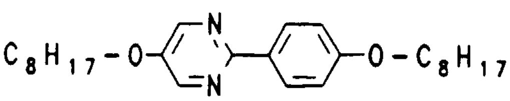

7,15 %

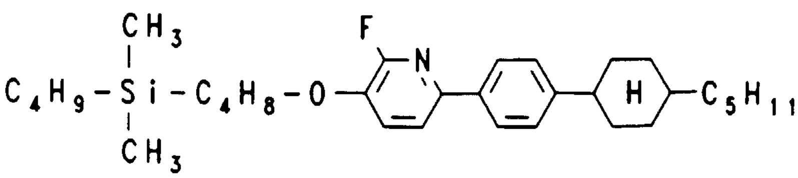

6,79 %

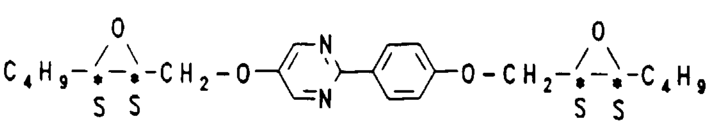

trans

6,80 %

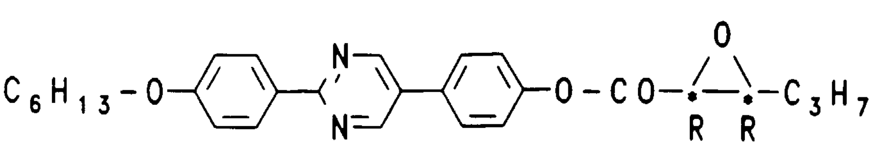

4,71 %

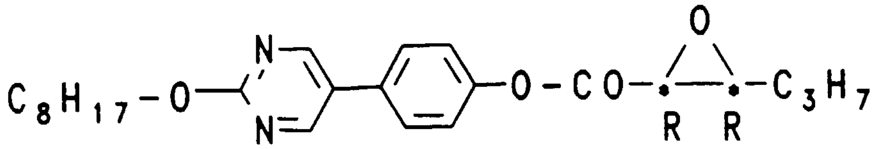

2,15%

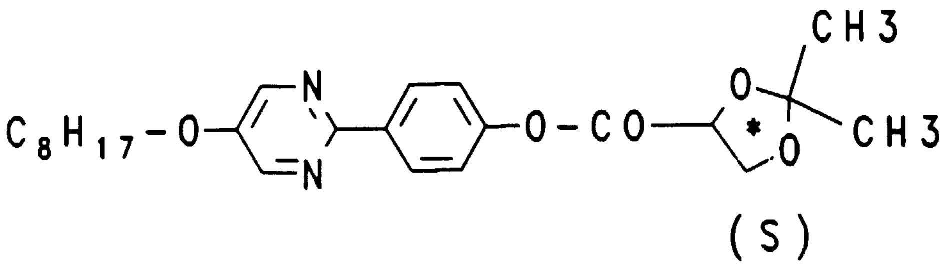

1,48 %

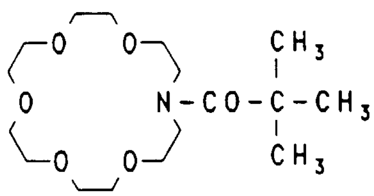

0,70 %

zeigt folgende flüssigkristalline Phasenbereiche:

X -35 $S_C^*$ 70 $S_A$ 85 N* 91 I

Die spontane Polarisation beträgt bei 25°C 50 n C/cm$^2$, die kritische Pulsfläche in der Chevron Geometrie 460 Vs/m. Die Mischung schaltet im Multiplexbetrieb mit 44% Margin, besitzt einen effektiven Schaltwinkel 2 $\Theta_{eff}$ von 27° und hat ein Kontrastverhältnis von 18:1.

Beispiel 4:

eine Mischung bestehend aus:

Gewichtsanteile

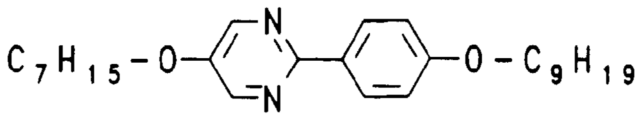

3,85 %

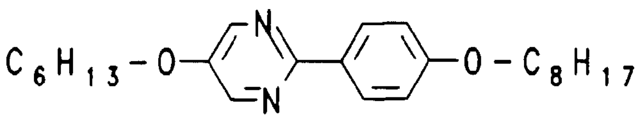

4,34 %

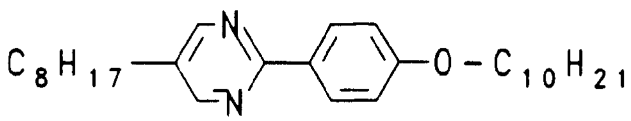

4,8 %

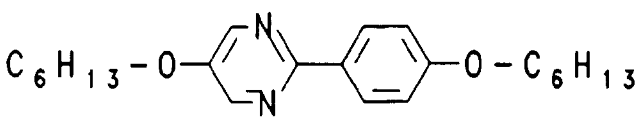

4,03 %

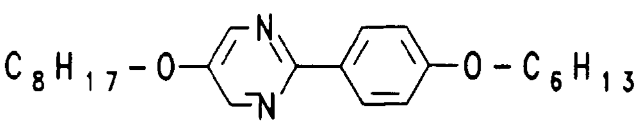

4,34 %

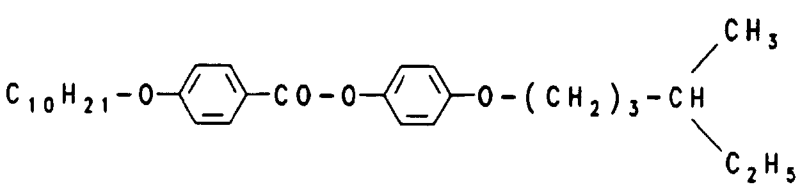

8,28 %

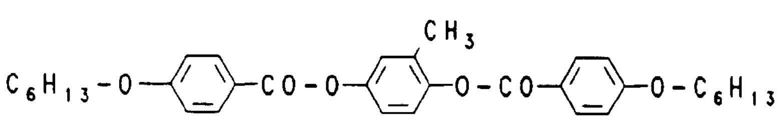

2,35 %

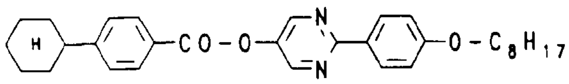

3,29 %

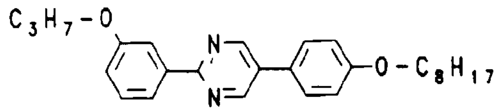

6,50 %

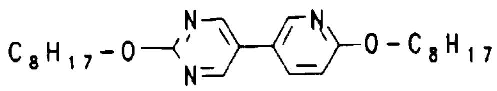

3,69 %

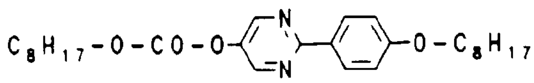

8,13 %

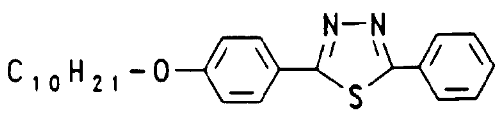

6,05 %

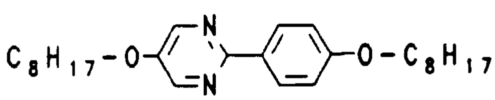

4,66 %

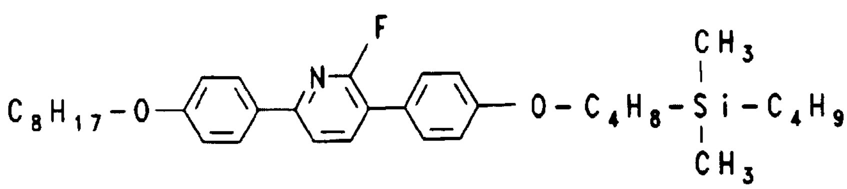

7,49%

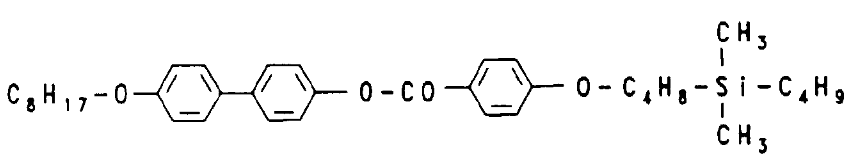

8,23%

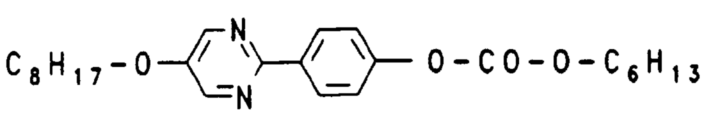

7,63%

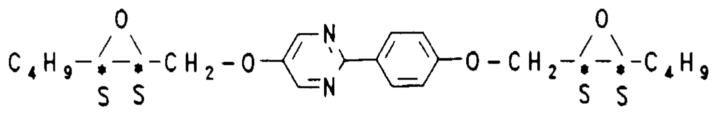 trans 2,79%

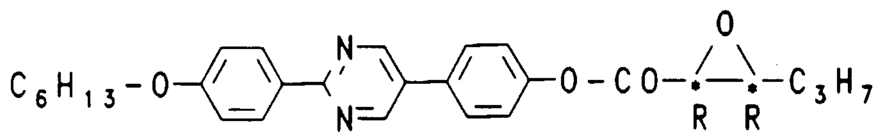 6,85%

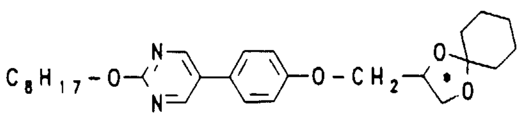

(S) 2,05%

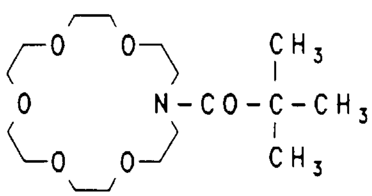 0,67 %

zeigt folgende flüssigkristalline Phasenbereiche:

X -39 $S_C^*$ 76 $S_A$ 85 N* 94 I

Die spontane Polarisation beträgt bei 25 °C 45 n C/cm$^2$, die kritische Pulsfläche in der Chevron Geometrie 520 Vs/m. Die Mischung schaltet im Multiplexbetrieb mit 70% Margin, besitzt einen effektiven Schaltwinkel 2 $\Theta_{eff}$ von 28,5° und hat ein Kontrastverhältnis von 25:1.

Beispiel 5:

eine Mischung bestehend aus:

Gewichtsanteile

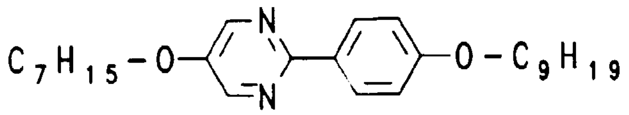

4,26 %

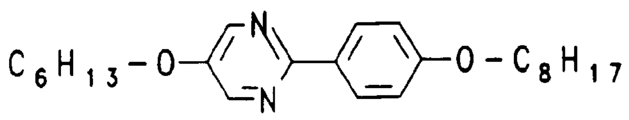

4,81 %

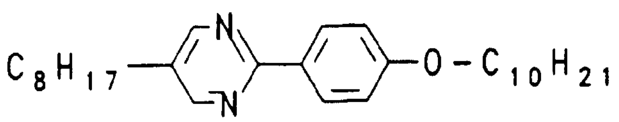

5,31 %

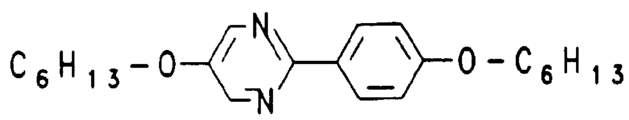

4,46 %

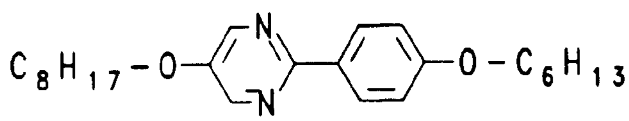

4,81 %

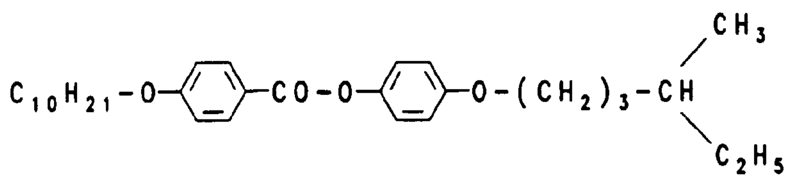

7,45 %

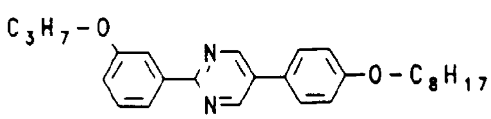

6,06 %

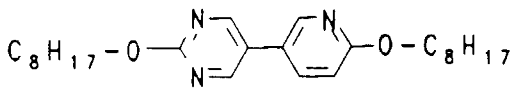

3,72 %

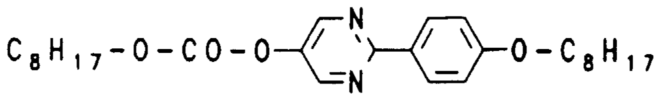

7,47%

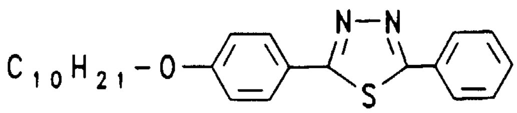

6,10 %

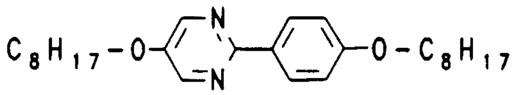

5,16 %

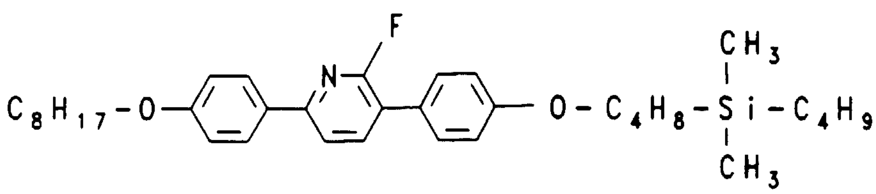

7,53%

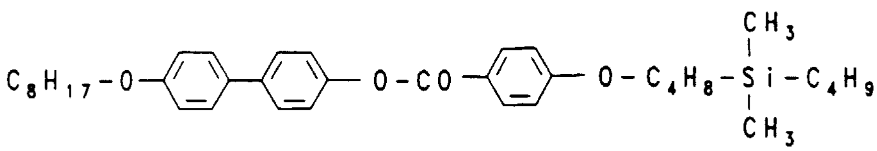

8,30%

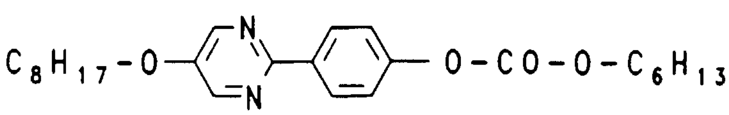

6,82%

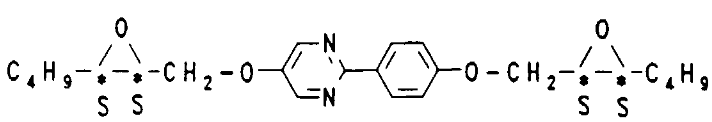

trans

2,82%

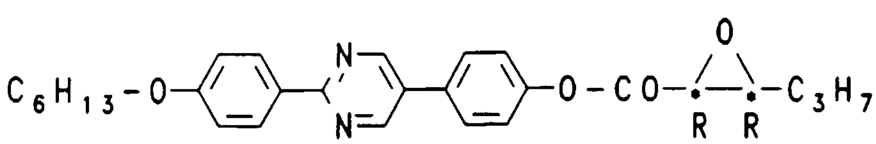

5,24%

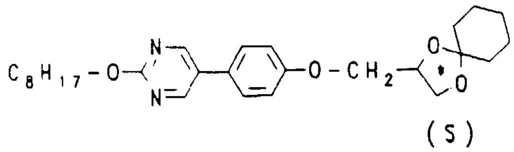

2,06%

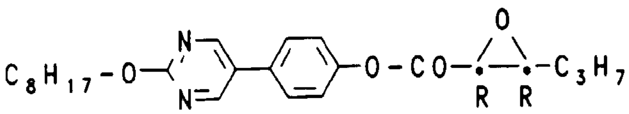

1,50%

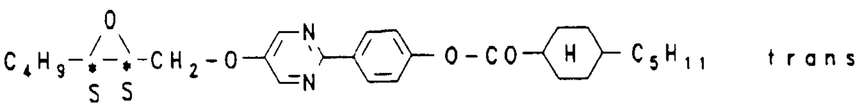

5,46%

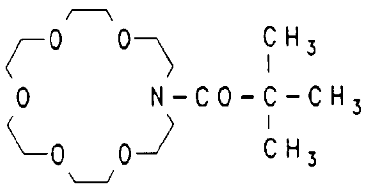

0,64 %

zeigt folgende flüssigkristalline Phasenbereiche:

X -37 $S_C^*$ 80 $S_A$ 88 N* 95 I

Die spontane Polarisation beträgt bei 25°C 57 n C/cm$^2$, die kritische Pulsfläche in der Chevron Geometrie 415 Vs/m. Die Mischung schaltet im Multiplexbetrieb mit 47% Margin, besitzt einen effektiven Schaltwinkel 2 $\Theta_{eff}$ von 27° und hat ein Kontrastverhältnis von 18:1.

Beispiel 6

Eine Mischung bestehend aus:

| | Gewichtsanteil |
|---|---|
| 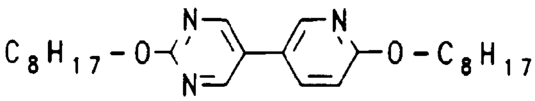 | 3,44 |
| 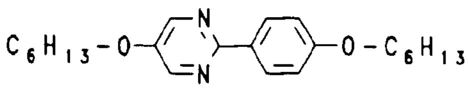 | 3,01 |
| 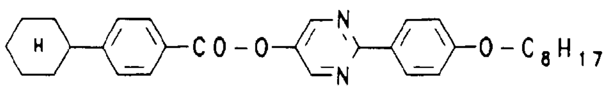 | 5,04 |
| 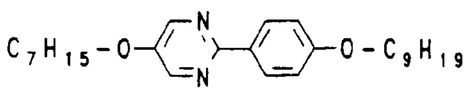 | 5,54 |
| 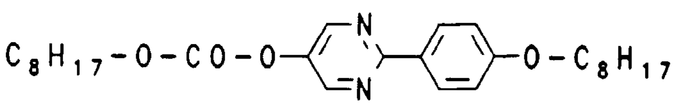 | 6,69 |
| 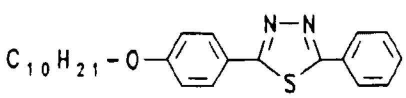 | 5,74 |
| 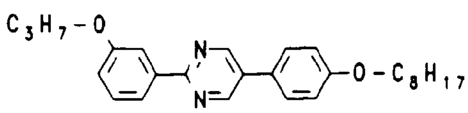 | 7,09 |
| 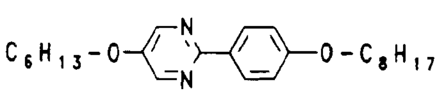 | 5,70 |
| 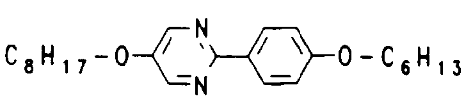 | 6,25 |

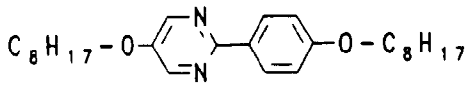

6,72

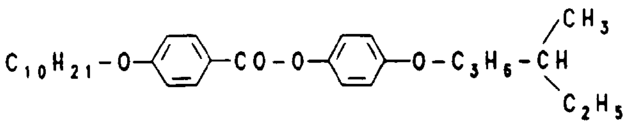

rac

7,79

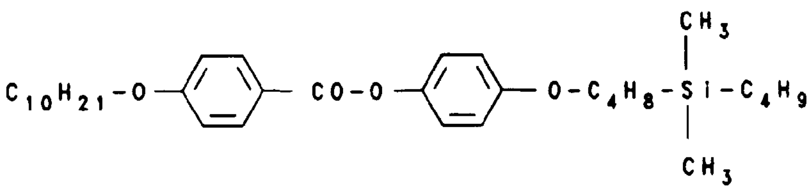

4,57

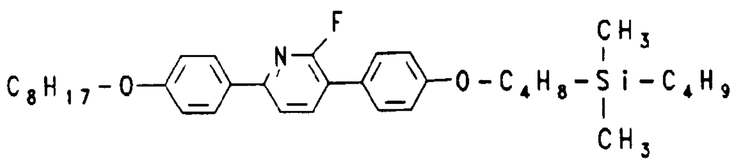

7,02

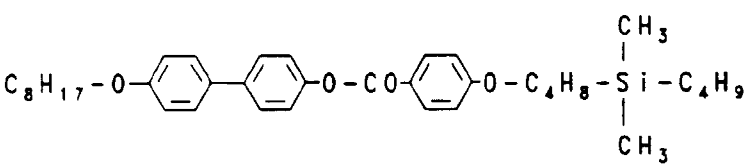

4,98

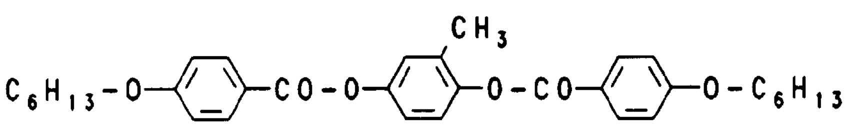

2,21

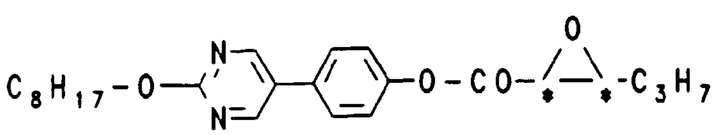

cis

3,45

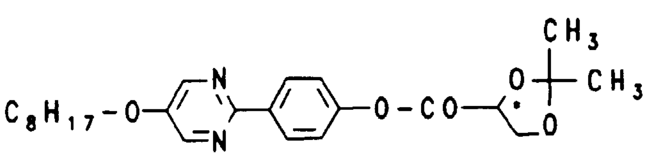

3,35

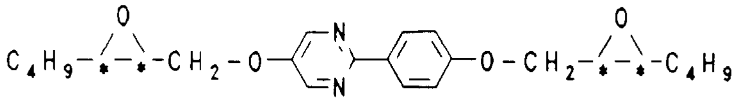 trans 6,98

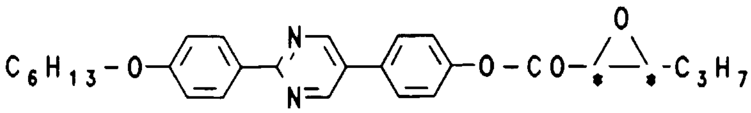 cis 3,65

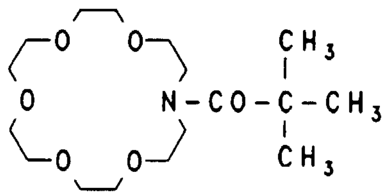 0,78

zeigt folgende flüssigkristalline Phasenbereiche:

X -33 $S_C^*$ 73 $S_A$ 84 N* 93 I

Die spontane Polarisation beträgt bei 25°C 62 nC/cm$^2$, die kritische Pulsfläche in der Chevron-Geometrie 480 Vs/m. Die Mischung schaltet im Multiplexbetrieb mit 53 % Margin, besitzt einen effektiven Schaltwinkel 2 $\Theta_{eff}$ 29° und hat ein Kontrastverhältnis von 26:1.

Beispiel 7

Eine Mischung bestehend aus:

Gewichtsanteile

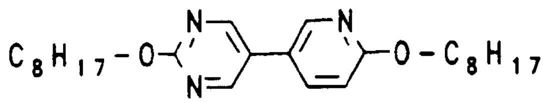

3,43

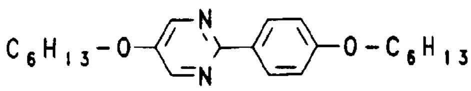

3,01

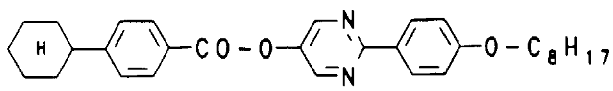

5,04

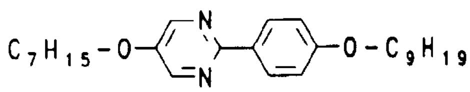

5,53

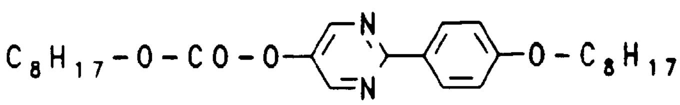

6,64

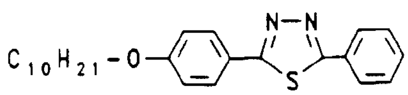

5,74

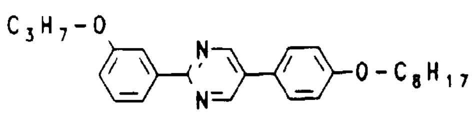

7,07

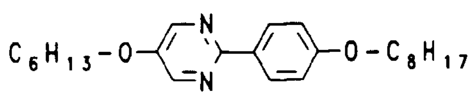

5,69

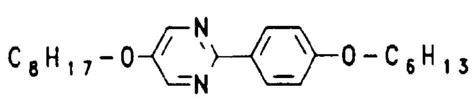

6,24

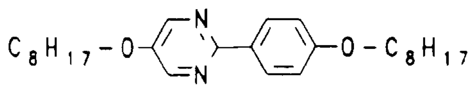

6,70

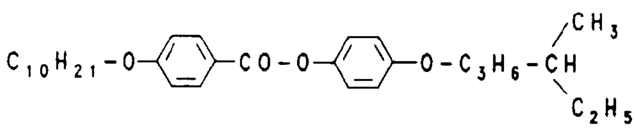

rac

7,77

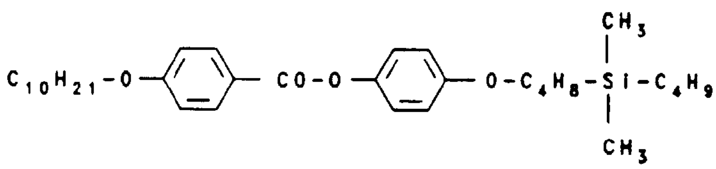

4,56

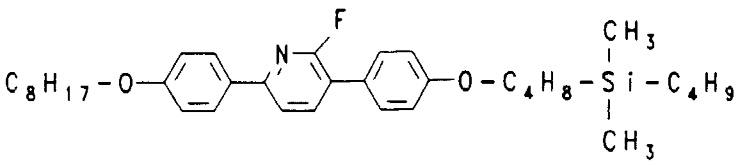

7,01

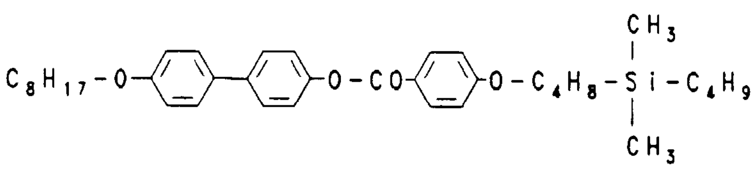

4,97

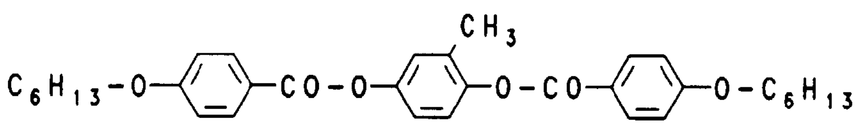

2,21

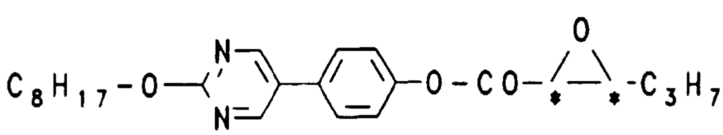

cis

3,80

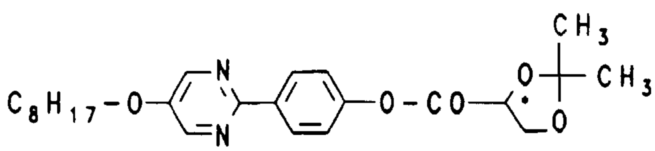

4,93

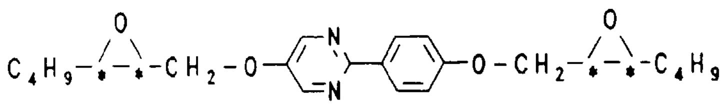 trans 4,74

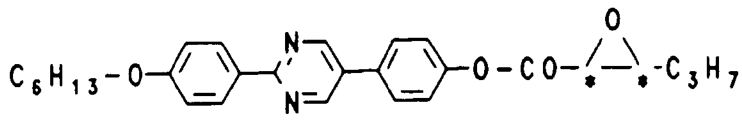 cis 4,24

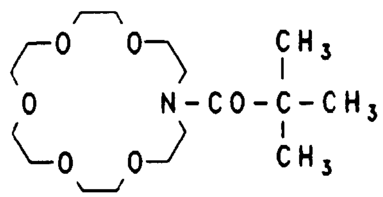 0,68

zeigt folgende flüssigkristalline Phasenbereiche:

X-30 $S_c^*$ 73 $S_A$ 85 N* 90,5 I

Die spontane Polarisation beträgt bei 25°C 63,5 nC/cm$^2$, die kritische Pulsfläche in der Chevron-Geometrie 465 Vs/m.

Die Mischung schaltet im Multiplexbetrieb mit 50 % Margin, besitzt einen effektiven Schaltwinkel 2 $\Theta_{eff}$ 28° und hat ein Kontrastverhältnis von 31:1

Die Beispiele zeigen, daß die erfindungsgemäßen Mischungen für den Einsatz in elektrooptischen Schalt- und Anzeigemedien besonders geeignet sind.

## Patentansprüche

**1.** Smektische Flüssigkristallmischung, bestehend aus

A. mindestens einer Verbindung der Formel (I),

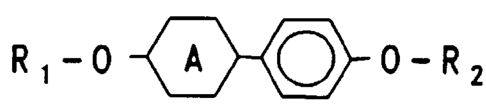 (I)

worin bedeuten

$R_1$, $R_2$ gleich oder verschieden, eine geradkettige oder verzweigte Alkylgruppe mit 1 bis 18 bzw. 3 bis 18 C-Atomen, wobei eine dem Sauerstoff benachbarte-$CH_2$-Gruppe auch durch -CO ersetzt sein kann,

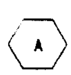 : 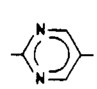 oder 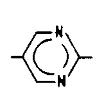

und/oder

mindestens eine Verbindung der Formel (II)

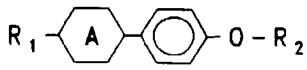

(II)

worin bedeuten:

$R_1$,$R_2$ gleich oder verschieden, eine verzweigte oder unverzweigte Alkylgruppe mit 1 bis 18 bzw. 3 bis 18 C-Atomen, wobei eine dem Sauerstoff benachbarte -$CH_2$-Gruppe auch durch -CO- ersetzt sein kann,

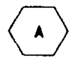 : 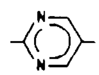 oder 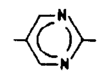

B. mindestens einer Verbindung der Formel (III)

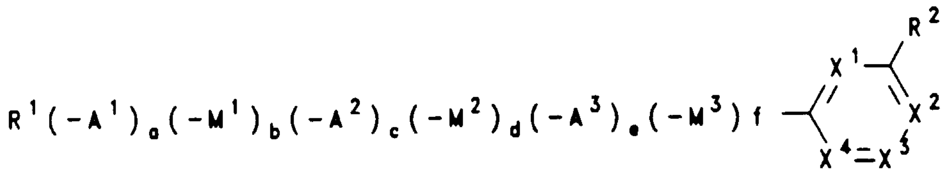

(III)

worin bedeuten

| | |
|---|---|
| $R^1$, $R^2$ | gleich oder verschieden, ein geradkettiger oder verzweigter Alkylrest mit 1 bis 22 bzw. 3 bis 22 C-Atomen, wobei auch eine oder zwei nicht benachbarte -$CH_2$-Gruppen durch -O-, -CO-, -CO-O-, -O-CO-, -O-CO-O- oder -$Si(CH_3)_2$- ersetzt sein können, |
| $A^1$, $A^2$, $A^3$, | gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder -$CH_3$ ersetzt sein können, (1,3,4)-Thiadiazol-2,5-diyl, |

und $A^1$

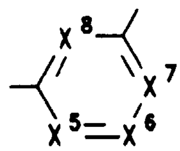

| | |
|---|---|
| $M^1$, $M^2$, $M^3$ | gleich oder verschieden, -O-, -CO-O-, -O-CO-, -$CH_2$-O-, -O-$CH_2$-, -$CH_2$-$CH_2$-, |
| $X^1$, $X^2$, $X^3$, $X^4$, $X^5$, $X^6$, $X^7$, $X^8$ | CH oder N, wobei die Zahl der N-Atome pro Sechsring 0,1 oder 2 beträgt, |
| a, b, c, d, e, f | sind null oder eins, unter der Bedingung, daß die Summe aus a + c + e 0, 1, 2 oder 3 ist; |

C. Verbindungen der Formel (IV)

$$R^1\text{-O-CO-O-}(\text{-}A^1)_a(\text{-}M^1)_b(\text{-}A^2)_c(\text{-}M^2)_d(\text{-}A^3)_e(\text{-O})_f\text{-}R^2 \qquad (IV)$$

worin bedeuten

$R^1$, $R^2$ gleich oder verschieden, eine geradkettige oder verzweigte Alkylgruppe mit 1 bis 22 bzw. 3 bis 22 C-Atomen,

$A^1$, $A^2$, $A^3$, gleich oder verschieden, 1,4-Phenylen, wobei auch ein oder zwei H-Atome durch F ersetzt sein können, Pyrimidin-2,5-diyl, wobei auch ein oder zwei H-Atome durch F ersetzt sein können, Pyridin-2,5-diyl, wobei auch ein oder zwei H-Atome durch F ersetzt sein können,

$M^1$, $M^2$, gleich oder verschieden, -O-, -CO-, -CO-O-, -O-CO-, $-CH_2-O-$, $-O-CH_2-$ oder $-CH_2-CH_2-$ ,

a, b, c, d, e , f null oder eins, unter der Bedingung, daß die Summe a + c + e 1, 2 oder 3 ist;

sowie mindestens einer Verbindung aus den Gruppen D bis H:

D. Siliziumverbindungen der Formel (V)

$$R^1(-A^1)_i(-M^1)_k(-A^2)_l(-M^2)_m(-A^3)_n-R^2 \qquad (V)$$

worin bedeuten:

$R^1$ geradkettiges oder verzweigtes Alkyl mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können,

$R^2$ geradkettiges oder verzweigtes Alkyl mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können, mit der Maßgabe, daß eine, nicht an Sauerstoff gebundene,$-CH_2$-Gruppe durch $-Si(CH_3)_2-$ ersetzt ist,

$A^1$, $A^2$, $A^3$ gleich oder verschieden 1,4-Phenylen, wobei ein oder zwei H-Atome durch F ersetzt sein können, trans-1,4-Cyclohexylen, Pyridin-2,5-diyl, wobei ein oder zwei H-Atome durch F ersetzt sein können, Pyrimidin-2,5-diyl, wobei ein oder zwei H-Atome durch F ersetzt sein können, (1,3,4)-Thiadiazol-2,5-diyl,

$M^1$, $M^2$ gleich oder verschieden, -CO-O-, -O-CO-, $-CH_2-O-$, $-O-CH_2-$,

i, k, l, m, n null oder 1, mit der Maßgabe, daß i + l + n = 2 oder 3 ist;

E. Hydrochinonderivate der Formel (VI),

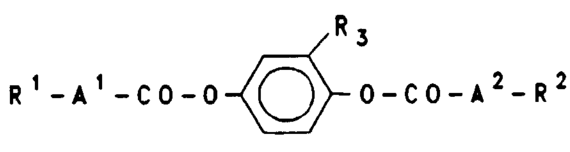

(VI)

wobei bedeuten

$R^1$, $R^2$: gleich oder verschieden geradkettiger oder verzweigter Alkylrest mit 1 bzw. 3 bis 16 vorzugsweise 1 bzw. 3 bis 10 C-Atomen, wobei auch eine oder zwei nicht benachbarte $-CH_2$-Gruppen durch -O-, -CO-, -O-CO-, -CO-O-, -O-CO-O-, ersetzt sein können,

$R^3$ $-CH_3$, $CF_3$ oder $-C_2H_5$;

$A^1$, $A^2$ gleich oder verschieden,

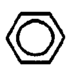 , 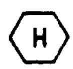 ;

F. Pyridylpyrimidine der Formel (VII)

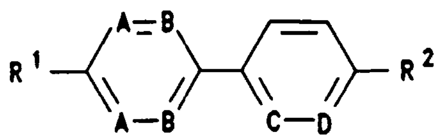 (VII)

wobei bedeuten
A gleich N und B gleich CH oder A gleich CH und B gleich N, C gleich N und D gleich CH oder C gleich CH und D gleich N,
wobei eine oder zwei CH-Gruppen durch CF-Gruppen ersezt sein können,

$R^1$, $R^2$ gleich oder verschieden, ein geradkettiger oder verzweigter Alkylrest mit 1 bis 22 bzw. 3 bis 22 C-Atomen, wobei auch eine oder zwei nicht benachbarte -$CH_2$-Gruppen durch -O-, -CO-, -CO-O-, -O-CO- oder -O-CO-O- ersetzt sein können;

G. Phenylbenzoate der Formel (VIII)

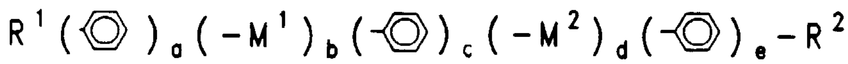 (VIII)

wobei bedeuten

| | |
|---|---|
| $R^1$, $R^2$ | gleich oder verschieden, ein geradkettiger oder verzweigter Alkylrest mit 1 bis 22 bzw. 3 bis 22 C-Atomen, wobei auch eine oder zwei nicht benachbarte -$CH_2$-Gruppen durch -O-, -CO-, -CO-O-, -O-CO- oder -O-CO-O- ersetzt sein können, |
| $M^1$, $M^2$ | gleich oder verschieden, -CO-O-, -O-CO-, |
| a, b, c, d, e | null oder eins, unter der Bedingung, daß a + c + e = 2 oder 3 und b + d = 1 oder 2 ist, |

und

H. Verbindungen der Formel (IX)

$$R^1(-A^1)_a(-M^1)_b(-A^2)_c(-M^2)_d(-A^3)_e(-M^3)_f(-A^4)\text{-H} \qquad \text{(IX)}$$

wobei bedeuten:

| | |
|---|---|
| $R^1$ | geradkettiger oder verzweigter Alkylrest mit 1 bis 22 bzw. 3 bis 22 C-Atomen, wobei auch eine oder zwei nicht benachbarte -$CH_2$ Gruppen durch -O-, -CO-, -CO-O-, -O-CO-, -O-CO-O- oder -$Si(CH_3)_2$-ersetzt sein können. |
| $A^1$, $A^2$, $A^3$, $A^4$ | gleich oder verschieden, 1,4-Phenylen, wobei ein oder zwei H-Atome durch F oder CN ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, (1,3,4)-Thiadiazol-2,5-diyl oder Naphthalin-2,6-diyl, |
| $M^1$, $M^2$, $M^3$ | gleich oder verschieden, -CO-O-, -O-CO-, -$CH_2$-O-, -O-$CH_2$-, oder -$CH_2$-$CH_2$- |
| a, b, c, d, e, f | null oder eins, unter der Bedingung, daß die Summe aus a + c + e 0, 1, 2 oder 3 ist. |

**2.** Smektische Flüssigkristallmischung nach Anspruch 1, dadurch gekennzeichnet, daß die Komponente A aus Verbindungen der Formel (I) und/oder (II), worin bedeuten:

$R^1$, $R^2$: gleich oder verschieden eine geradkettige oder verzweigte Alkylgruppe mit 1 bis 12 bzw. 3 bis 12 C-Atomen, wobei eine dem Sauerstoff benachbarte-$CH_2$-Gruppe auch durch -CO- ersetzt sein kann,

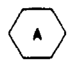 : 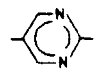

die Komponente B aus Verbindungen der Formel (III), worin bedeuten:

$R^1$,$R^2$ gleich oder verschieden, geradkettiger Alkylrest mit 1 bis 14 C-Atomen, wobei auch eine oder zwei nicht benachbarte -$CH_2$ Gruppen durch -O-, -CO-, -CO-O-, -O-CO-, -O-CO-O- oder -$Si(CH_3)_2$-ersetzt sein können,

$A^1$, $A^2$, $A^3$ gleich oder verschieden, 1,4-Phenylen, Pyrimidin-2,5-diyl, wobei auch ein oder zwei H-Atome durch F ersetzt sein können, trans-1,4-Cyclohexylen, (1,3,4)-Thiadiazol-2,5-diyl;

und die Komponente C aus Verbindungen der Formel (IV), worin bedeuten:

$R^1$, $R^2$ gleich oder verschieden, geradkettiger Alkylrest mit 1 bis 14 C-Atomen, wobei auch eine oder zwei nicht benachbarte -$CH_2$-Gruppen durch -O-, -CO-, -CO-O-, -O-CO-, -O-CO-O- oder -$Si(CH_3)_2$-ersetzt sein können,

$A^1$, $A^2$, $A^3$ gleich oder verschieden, 1,4-Phenylen, Pyrimidin-2,5-diyl, wobei auch ein oder zwei H-Atome durch F ersetzt sein können, trans-1,4-Cyclohexylen, (1,3,4)-Thiadiazol-2,5-diyl,

besteht.

**3.** Smektische Flüssigkristallmischung nach Anspruch 1 oder 2, dadurch gekennzeichnet, daß sie neben mindestens je einer Verbindung aus den Gruppen A, B und C aus mindestens je einer Verbindung aus den Gruppen D bis H besteht.

**4.** Smektische Flüssigkristallmischung nach einem oder mehreren der Ansprüche 1 bis 3, dadurch gekennzeichnet, daß die Komponenten A bis H in den folgenden Mengen (in Gew.-%, bezogen auf die gesamte Mischung) vorliegen:

A: 20 bis 50 %,
B: 5 bis 10 %,
C: 5 bis 15 %,
D: 5 bis 20 %,
E: 2 bis 5 %,
F: 2 bis 5 %,
G: 2 bis 20 %,
H: 5 bis 20 %.

**5.** Ferroelektrische Flüssigkristallmischung, bestehend aus mindestens je einer Verbindung aus den Gruppen A, B und C, mindestens einer Verbindung aus den Gruppen D bis H, mindestens einer Verbindung aus der Gruppe N: makrocyclische Verbindungen der Formel (XV)

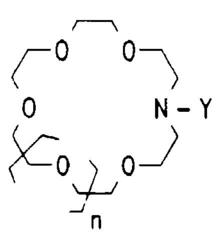

(XV)

mit

n : 0, 1
Y : -CO-(t-Butyl), -CO-(Adamantyl)

und mindestens zwei Verbindungen aus den Gruppen I bis M:

I. Optisch aktive Phenylbenzoate der Formel (X)

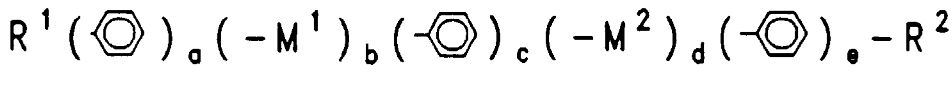

(X)

wobei bedeuten

| | |
|---|---|
| $R^1$, $R^2$ | gleich oder verschieden, ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO- oder -O-CO-O- ersetzt sein können, und worin wenigstens einer der Reste $R^1$, $R^2$ eine verzweigte, optisch aktive Alkylgruppe ist, |
| $M^1$, $M^2$, | gleich oder verschieden, -CO-O-, -O-CO- oder eine Einfachbindung, |
| a, b, c, d, e | null oder eins, unter der Bedingung, daß die Summe aus a + c + e 2 oder 3 ist und b+d 1 oder 2; |

J. Optisch aktive Oxiranether der Formel (XI),

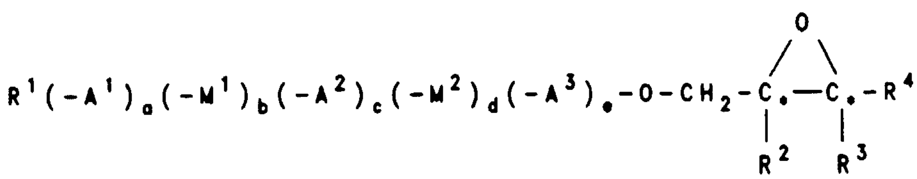

(XI)

wobei die Symbole und Indizes folgende Bedeutungen haben

| | |
|---|---|
| * | chirales Zentrum |
| $R^1$ | ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2$- ersetzt sein können, |

oder die nachfolgende, optisch aktive Gruppe,

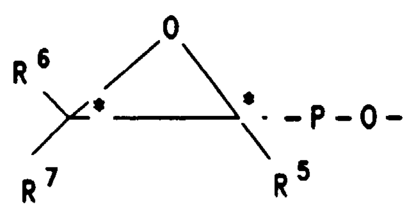

| | |
|---|---|
| $R^2$,$R^3$,$R^4$,$R^5$,$R^6$,$R^7$ | gleich oder verschieden, H oder ein geradkettiger oder verzweigter Alkylrest mit 1 bis 16 bzw. 3 bis 16 C-Atomen, |
| P | $-CH_2$- oder -CO- , |
| $A^1$, $A^2$, $A^3$ | gleich oder verschieden, 1,4-Phenylen wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, bei dem ein oder zwei H-Atome durch -CN und/oder $-CH_3$ ersetzt sein können, (1,3,4)-Thiadiazol-2,5-diyl, |
| $M^1$, $M^2$ | gleich oder verschieden, -CO-O-, -O-CO-, $-CH_2$-O-, $-O-CH_2$-, $-CH_2-CH_2$-, |
| a, b, c, d, e | null oder eins; |

K. optisch aktive Oxiranester der Formel (XII)

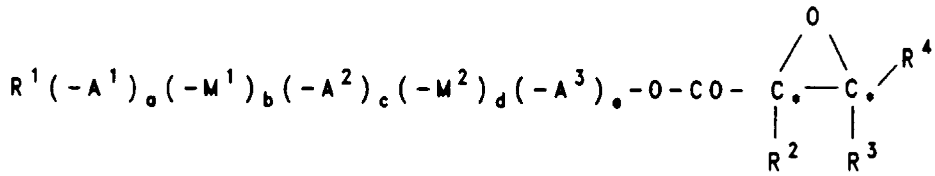 (XII)

wobei die Symbole und Indizes folgende Bedeutung haben

| | |
|---|---|
| * | chirales Zentrum |
| $R^1$ | ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2$-ersetzt sein können, |
| $R^2$, $R^3$,$R^4$ | gleich oder verschieden H oder ein geradkettiger oder verzweigter Alkylrest mit 1 bis 16 C-Atomen, |
| $A^1$, $A^2$, $A^3$ | gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, bei dem ein oder zwei H-Atome durch -CN und/oder $-CH_3$ ersetzt sein können, (1,3,4)-Thiadiazol-2,5-diyl, |
| $M^1$, $M^2$ | gleich oder verschieden, -CO-O-, -O-CO-, $-CH_2-O-$, $-O-CH_2-$, $-CH_2-CH_2-$, |
| a, b, c, d, e | null oder eins; |

L. optisch aktive Dioxolanether der Formel (XIII)

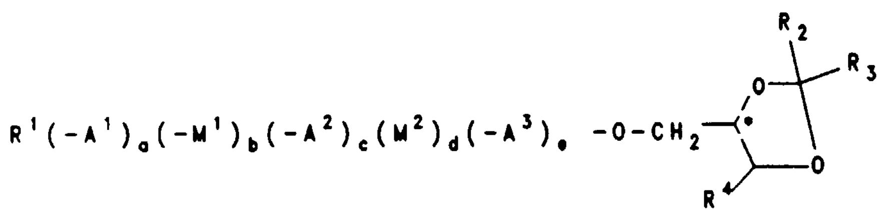 (XIII)

wobei die Symbole und Indizes folgende Bedeutung haben

| | |
|---|---|
| * | chirales Zentrum |
| $R^1$ | ein geradkettiger oder verzweigter Alkylrest mit 1 bis 22 bzw. 3 bis 22 C-Atomen, wobei auch eine oder zwei nicht benachbarte $-CH_2$-Gruppen durch -O-, -CO-, -CO-O-, -O-CO-, -O-CO-O- oder $-Si(CH_3)_2$-ersetzt sein können, |
| $R^2$, $R^3$,$R^4$ | gleich oder verschieden, H oder ein geradkettiger oder verzweigter Alkylrest mit 1 bis 16 C-Atomen, wobei $R^2$ und $R^3$ zusammen auch $-(CH_2)_5$ sein können, |
| $A^1$, $A^2$, $A^3$, | gleich oder verschieden, 1,4-Phenylen, wobei ein oder zwei H-Atome durch F ersetzt sein können, Pyridin-2,5-diyl, wobei ein oder zwei H-Atome jeweils durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2,5-diyl, |
| $M^1$, $M^2$ | gleich oder verschieden, -CO-O-, -O-CO-, $-CH_2-O-$, $-O-CH_2-$, $-CH_2-CH_2-$, |
| a, b, c, d, e | null oder eins; |

M. Optisch aktive Dioxolanester der Formel (XIV)

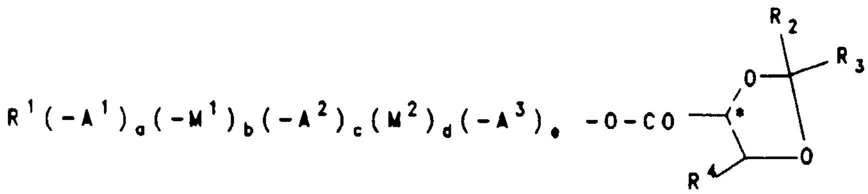 (XIV)

in der bedeuten:

| | |
|---|---|
| $R^1$ | geradkettiger oder verzweigter Alkyrest mit 1 bis 16 C-Atomen, wobei eine oder mehrere nicht benachbarte $-CH_2$ Gruppen durch -O-, -CO-, -O-CO- oder -CO-O- ersetzt sein können, |
| $R^2$, $R^3$, $R^4$ | gleich oder verschieden, H oder ein geradkettiger Alkylrest mit 1 bis 16 C-Atomen, wobei $R^2$ und $R^3$ zusammen auch $-(CH_2)_5-$ sein können, |
| $A^1$, $A^2$, $A^3$, | gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder $-CH_3$ ersetzt sein können, (1,3,4)-Thiadiazol-2,5-diyl, |
| $M^1$, $M^2$ | gleich oder verschieden, -CO-O-, -O-CO-, $-CH_2-O-$, $-O-CH_2-$, $-CH_2-CH_2-$, |
| a, b, c, d, e | null oder eins. |

**6.** Ferroelektrische, smektische Flüssigkristallmischung nach Anspruch 5, dadurch gekennzeichnet, daß sie mindestens drei Verbindungen aus den Gruppen I bis M enthält.

**7.** Ferroelektrische, smektische Flüssigkristallmischung nach Anspruch 5 oder 6, dadurch gekennzeichnet, daß sie Verbindungen aus den Gruppen J, K, L und M enthält.

**8.** Verwendung von smektischen Flüssigkristallmischungen nach einem oder mehreren der Ansprüche 1 bis 7 in elektrooptischen Schalt- und Anzeigevorrichtungen.

**9.** Elektrooptische Schalt- und Anzeigevorrichtung, enthaltend eine smektische Flüssigkristallmischung nach einem oder mehreren der Ansprüche 1 bis 7.

## Claims

**1.** A smectic liquid-crystal mixture comprising

A. at least one compound of the formula (I)

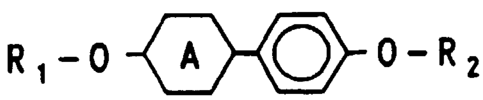 (I)

in which:

| | |
|---|---|
| $R_1$ and $R_2$ | are identical or different and are a straight-chain or branched alkyl group having 1 to 18 or 3 to 18 carbon atoms respectively, where a $-CH_2-$ group adjacent to the oxygen may also be replaced by -CO, |

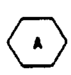 :

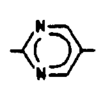 or 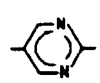

and/or
at least one compound of the formula (II)

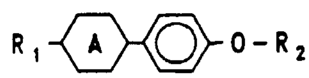

(II)

in which:

$R_1$ and $R_2$ are identical or different and are a branched or unbranched alkyl group having 1 to 18 or 3 to 18 carbon atoms respectively, where a $-CH_2-$ group adjacent to the oxygen may also be replaced by -CO-,

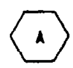 :

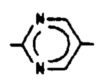 or 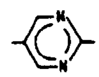

B. at least one compound of the formula (III)

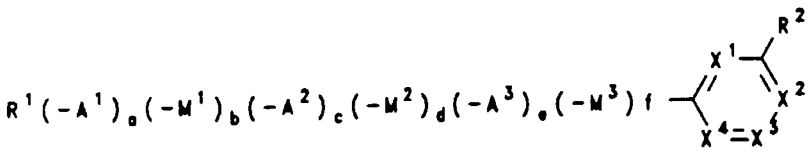

(III)

in which:

| | |
|---|---|
| $R^1$ and $R^2$ | are identical or different and are a straight-chain or branched alkyl radical having 1 to 22 or 3 to 22 carbon atoms respectively, where one or two nonadjacent $-CH_2-$ groups may also be replaced by -O-, -CO-, -CO-O-, -O-CO-, -O-CO-O- or $-Si(CH_3)_2-$, |
| $A^1$, $A^2$ and $A^3$ | are identical or different and are 1,4-phenylene, where one or two H atoms may be replaced by F, 2,5-pyridinediyl, where one or two H atoms may be replaced by F, 2,5-pyrimidinediyl, where one or two H atoms may be replaced by F, trans- 1,4-cyclohexylene, where one or two H atoms may be replaced by -CN and/or $-CH_3$, or 1,3,4-thiadiazole-2,5-diyl, |
| and $A^1$ | is 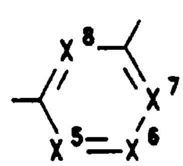 |
| $M^1$, $M^2$ and $M^3$ | are identical or different and are -O-, -CO-O-, -O-CO-, $-CH_2-O-$, $-O-CH_2-$, $-CH_2-CH_2-$ , |
| $X^1$, $X^2$, $X^3$, $X^4$, $X^5$, $X^6$, $X^7$ and $X^8$ | are CH or N, the number of N atoms per six-membered ring being 0, 1 or 2, |
| a, b, c, d, e | and f are zero or one, on condition that the sum of a + c + e is 0, 1, 2 or 3; |

C. compounds of the formula (IV)

$$R^1\text{-O-CO-O-}(\text{-}A^1)_a(\text{-}M^1)_b(\text{-}A^2)_c(\text{-}M^2)_d(\text{-}A^3)_e(\text{-O})_f\text{-}R^2 \qquad (IV)$$

in which:

$R^1$ and $R^2$ are identical or different and are a straight-chain or branched alkyl group having 1 to 22 or 3 to 22 carbon atoms respectively,

$A^1$, $A^2$ and $A^3$ are identical or different and are 1,4-phenylene, where one or two H atoms may also be replaced by F, 2,5-pyrimidinediyl, where one or two H atoms may also be replaced by F, or 2,5-pyridinediyl, where one or two H atoms may also be replaced by F,

$M^1$ and $M^2$ are identical or different and are -O-, -CO-, -CO-O-, -O-CO-, $-CH_2-O-$, $-O-CH_2-$ or $-CH_2-CH_2-$,

a, b, c, d, e and f are zero or one, on condition that the sum a + c + e is 1, 2 or 3;

and at least one compound from groups D to H:

D. silicon compounds of the formula (V)

$$R^1(\text{-}A^1)_i(\text{-}M^1)_k(\text{-}A^2)_l(\text{-}M^2)_m(\text{-}A^3)_n\text{-}R^2 \qquad (V)$$

in which:

$R^1$ is straight-chain or branched alkyl having 1 to 22 or 3 to 22 carbon atoms respectively, where one or two nonadjacent $-CH_2-$ groups may also be replaced by -O-, -CO-, -CO-O-, -O-CO- or -O-CO-O-,

$R^2$ is straight-chain or branched alkyl having 1 to 22 or 3 to 22 carbon atoms respectively, where one or two nonadjacent $-CH_2-$ groups may also be replaced by -O-, -CO-, -CO-O-, -O-CO- or -O-CO-O-, with the proviso that one $-CH_2-$group not attached to oxygen is replaced by $-Si(CH_3)_2-$,

$A^1$, $A^2$ and $A^3$ are identical or different and are 1,4-phenylene, where one or two H atoms may be replaced by F, trans 1,4-cyclohexylene, 2,5-pyridinediyl, where one or two H atoms may be replaced by F, 2,5-pyrimidinediyl, where one or two H atoms may be replaced by F, or 1,3,4-thiadiazole-2,5-diyl,

$M^1$ and $M^2$ are identical or different and are -CO-O-, -O-CO-, $-CH_2-O-$ or $-O-CH_2-$,

i, k, l, m and n are zero or 1, with the proviso that i + 1 + n = 2 or 3;

E. hydroquinone derivatives of the formula (VI)

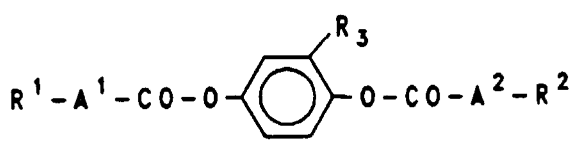

(VI)

in which:

$R^1$ and $R^2$ are identical or different and are a straight-chain or branched alkyl radical having 1 or 3 to 16, preferably 1 or 3 to 10, carbon atoms, respectively, where one or two nonadjacent $-CH_2-$ groups may also be replaced by -O-, -CO-, -O-CO-, -CO-O- or -O-CO-O-,

$R^3$ is $-CH_3$, $CF_3$ or $-C_2H_5$,

$A^1$ and $A^2$ are identical or different and are

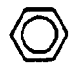 , 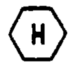 ;

F. pyridylpyrimidines of the formula (VII)

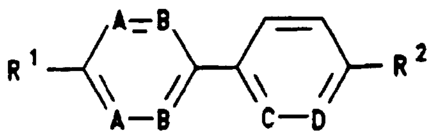

(VII)

in which:
A is N and B is CH or A is CH and B is N, C is N and D is CH or C is CH and D is N, where one or two CH groups may be replaced by CF groups,

$R^1$ and $R^2$ are identical or different and are a straight-chain or branched alkyl radical having 1 to 22 or 3 to 22 carbon atoms respectively, where one or two nonadjacent $-CH_2-$ groups may also be replaced by -O-, -CO-, -CO-O-, -O-CO- or -O-CO-O-;

G. phenylbenzoates of the formula (VIII)

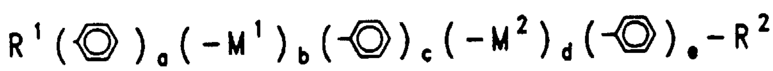

(VIII)

in which:

| | |
|---|---|
| $R^1$ and $R^2$ | are identical or different and are a straight-chain or branched alkyl radical having 1 to 22 or 3 to 22 carbon atoms respectively, where one or two nonadjacent $-CH_2-$ groups may also be replaced by -O-, -CO-, -CO-O-, -O-CO- or -O-CO-O-, |
| $M^1$ and $M^2$ | are identical or different and are -CO-O-, -O-CO-, |
| a, b, c, d and e | are zero or one, on condition that a + c + e = 2 or 3 and b + d = 1 or 2, |

and

H. compounds of the formula (IX)

$$R^1(-A^1)_a(-M^1)_b(-A^2)_c(-M^2)_d(-A^3)_e(-M^3)_f(-A^4)-H \qquad (IX)$$

in which:

| | |
|---|---|
| $R^1$ | is a straight-chain or branched alkyl radical having 1 to 22 or 3 to 22 carbon atoms respectively, where one or two nonadjacent $-CH_2$ groups may also be replaced by -O-, -CO-, -CO-O-, -O-CO-, -O-CO-O- or $-Si(CH_3)_2-$, |
| $A^1$, $A^2$, $A^3$ and $A^4$ | are identical or different and are 1,4-phenylene, where one or two H atoms may be replaced by F or CN, 2,5-pyridinediyl, where one or two H atoms may be replaced by F, 2,5-pyrimidinediyl, where one or two H atoms may be replaced by F, trans-1,4-cyclohexylene, 1,3,4-thiadiazole-2,5-diyl or 2,6-naphthalene-diyl, |
| $M^1$, $M^2$ and $M^3$ | are identical or different and are -CO-O-, -O-CO-, $-CH_2-O-$, $-O-CH_2-$ or $-CH_2-CH_2-$, |
| a, b, c, d, e and f | are zero or one, on condition that the sum of a + c + e is 0, 1, 2 or 3. |

**2.** A smectic liquid-crystal mixture as claimed in claim 1, wherein component A comprises compounds of the formula (I) and/or (II) in which:

$R^1$ and $R^2$ are identical or different and are a straight-chain or branched alkyl group having 1 to 12 or 3 to

12 carbon atoms respectively, where a $-CH_2-$ group adjacent to the oxygen may also be replaced by -CO-, component B comprises compounds of the formula (III) in which:

| | |
|---|---|
| $R^1$ and $R^2$ | are identical or different and are a straight-chain alkyl radical having 1 to 14 carbon atoms, where one or two nonadjacent $-CH_2$ groups may also be replaced by -O-, -CO-, -CO-O-, -O-CO-, -O-CO-O- or $-Si(CH_3)_2-$, |
| $A^1$, $A^2$ and $A^3$ | are identical or different and are 1,4-phenylene, 2,5-pyrimidinediyl, where one or two H atoms may also be replaced by F, trans-1,4-cyclohexylene or 1,3,4-thiadiazole-2,5-diyl; |

and component C comprises compounds of the formula (IV) in which:

| | |
|---|---|
| $R^1$ and $R^2$ | are identical or different and are a straight-chain alkyl radical having 1 to 14 carbon atoms, where one or two nonadjacent $-CH_2-$ groups may also be replaced by -O-, -CO-, -CO-O-, -O-CO-, -O-CO-O- or $-Si(CH_3)_2-$, |
| $A^1$, $A^2$ and $A^3$ | are identical or different and are 1,4-phenylene, 2,5-pyrimidinediyl, where one or two H atoms may also be replaced by F, trans-1,4-cyclohexylene or 1,3,4-thiadiazole-2,5-diyl. |

**3.** A smectic liquid-crystal mixture as claimed in claim 1 or 2, which comprises, in addition to at least one compound from each of groups A, B and C, at least one compound from each of groups D to H.

**4.** A smectic liquid-crystal mixture as claimed in one or more of claims 1 to 3, wherein components A to H are present in the following quantities (in % by weight, based on the overall mixture):

A: from 20 to 50%,
B: from 5 to 10%,
C: from 5 to 15%,
D: from 5 to 20%,
E: from 2 to 5%,
F: from 2 to 5%,
G: from 2 to 20%,
H: from 5 to 20%.

**5.** A ferroelectric liquid-crystal mixture, comprising at least one compound from each of groups A, B and C, at least one compound from groups D to H, at least one compound from group
N: macrocyclic compounds of the formula (XV)

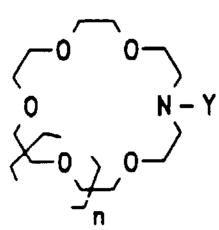

(XV)

where

n is 0 or 1 and
Y is -CO-(t-butyl) or -CO-(adamantyl)

and at least two compounds from groups I to M:

I. optically active phenylbenzoates of the formula (X)

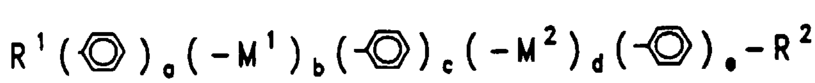

(X)

in which:

| | |
|---|---|
| $R^1$ and $R^2$ | are identical or different and are a straight-chain or branched alkyl radical having 1 to 22 or 3 to 22 carbon atoms respectively, where one or two nonadjacent $-CH_2-$ groups may also be replaced by -O-, -CO-, -CO-O-, -O-CO- or -O-CO-O-, and in which at least one of the radicals $R^1$ and $R^2$ is a branched, optically active alkyl group, |
| $M^1$ and $M^2$ | are identical or different and are -CO-O-, -O-CO- or a single bond, |
| a, b, c, d and e | are zero or one, on condition that the sum of a + c + e is 2 or 3 and b + d is 1 or 2; |

J. optically active oxirane ethers of the formula (XI)

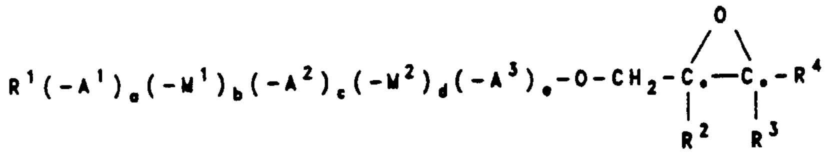

(XI)

in which the symbols and indices have the following meanings:

| | |
|---|---|
| * | is a center of chirality, |
| $R^1$ | is a straight-chain or branched alkyl radical having 1 to 22 or 3 to 22 carbon atoms respectively, where one or two nonadjacent $-CH_2-$ groups may also be replaced by -O-, -CO-, -CO-O-, -O-CO-, -O-CO-O- or $-Si(CH_3)_2-$, |

or the optically active group below,

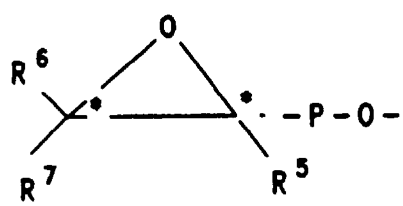

| | |
|---|---|
| $R^2$, $R^3$, $R^4$, $R^5$, $R^6$ and $R^7$ | are identical or different and are H or a straight-chain or branched alkyl radical having 1 to 16 or 3 to 16 carbon atoms respectively, |
| P | is $-CH_2-$ or -CO-, |
| $A^1$, $A^2$ and $A^3$ | are identical or different and are 1,4-phenylene, where one or two H atoms may be replaced by F, 2,5-pyridinediyl, where one or two H atoms may be replaced by F, 2,5-pyrimidinediyl, where one or two H atoms may be replaced by F, trans-1,4-cyclohexylene, in which one or two H atoms may be replaced by -CN and/or $-CH_3$, or 1,3,4-thiadiazole-2,5-diyl, |
| $M^1$ and $M^2$ | are identical or different and are -CO-O-, -O-CO-, $-CH_2-O-$, $-O-CH_2-$ or $-CH_2-CH_2-$, |
| a, b, c, d and e | are zero or one; |

K. optically active oxirane esters of the formula (XII)

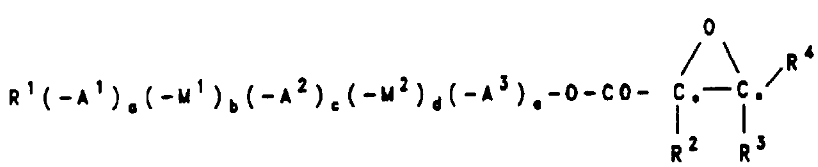

(XII)

in which the symbols and indices have the following meanings:

| | |
|---|---|
| * | is a center of chirality, |
| $R^1$ | is a straight-chain or branched alkyl radical having 1 to 22 or 3 to 22 carbon atoms respectively, where one or two nonadjacent $-CH_2-$ groups may also be replaced by -O-, -CO-, -CO-O-, -O-CO-, -O-CO-O- or $-Si(CH_3)_2-$, |
| $R^2$, $R^3$ and $R^4$ | are identical or different and are H or a straight-chain or branched alkyl radical having 1 to 16 carbon atoms, |
| $A^1$, $A^2$ and $A^3$ | are identical or different and are 1,4-phenylene, where one or two H atoms may be replaced by F, 2,5-pyridinediyl, where one or two H atoms may be replaced by F, 2,5-pyrimidinediyl, where one or two H atoms may be replaced by F, trans-1,4-cyclohexylene, in which one or two H atoms may be replaced by -CN and/or $-CH_3$, or 1,3,4-thiadiazole-2,5-diyl, |
| $M^1$ and $M^2$ | are identical or different and are -CO-O-, -O-CO-, $-CH_2-O-$, $-O-CH_2-$ or $-CH_2-CH_2-$, |
| a, b, c, d and e | are zero or one; |

L. optically active dioxolane ethers of the formula (XIII)

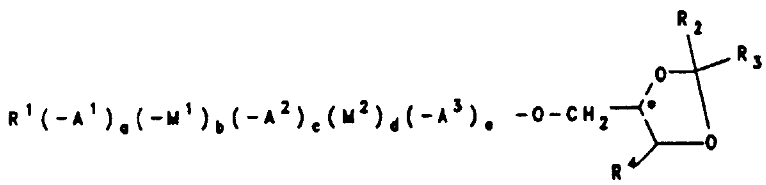

(XIII)

in which the symbols and indices have the following meanings:

| | |
|---|---|
| * | is a center of chirality, |
| $R^1$ | is a straight-chain or branched alkyl radical having 1 to 22 or 3 to 22 carbon atoms respectively, where one or two nonadjacent $-CH_2-$ groups may also be replaced by -O-, -CO-, -CO-O-, -O-CO-, -O-CO-O- or $-Si(CH_3)_2-$, |
| $R^2$, $R^3$ and $R^4$ | are identical or different and are H or a straight-chain or branched alkyl radical having 1 to 16 carbon atoms, where $R^2$ and $R^3$ together may also be $-(CH_2)_5-$, |
| $A^1$, $A^2$ and $A^3$ | are identical or different and are 1,4-phenylene, where one or two H atoms may be replaced by F, 2,5-pyridinediyl, where one or two H atoms may each be replaced by F, 2,5-pyrimidinediyl, where one or two H atoms may be replaced by F, trans-1,4-cyclohexylene, where one or two H atoms may be replaced by -CN and/or $-CH_3$, or 1,3,4-thiadiazole-2,5-diyl, |
| $M^1$ and $M^2$ | are identical or different and are -CO-O-, -O-CO-, $-CH_2-O-$, $-O-CH_2-$ or $-CH_2-CH_2-$, |
| a, b, c, d and e | are zero or one; |

M. optically active dioxolane esters of the formula (XIV)

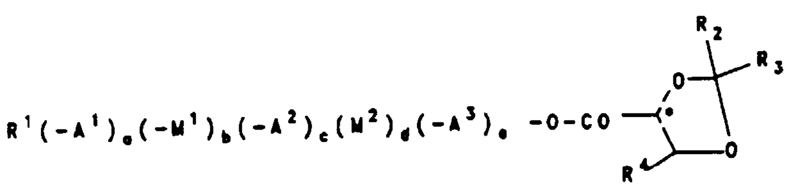

(XIV)

in which:

| | |
|---|---|
| $R^1$ | is a straight-chain or branched alkyl radical having 1 to 16 carbon atoms, where one or more nonadjacent $-CH_2$ groups may be replaced by -O-, -CO-, -O-CO- or -CO-O-, |
| $R^2$, $R^3$ and $R^4$ | are identical or different and are H or a straight-chain alkyl radical having 1 to 16 carbon atoms, where $R^2$ and $R^3$ together may also be $-(CH_2)_5-$, |
| $A^1$, $A^2$ and $A^3$ | are identical or different and are 1,4-phenylene, where one or two H atoms may be replaced by F, 2,5-pyridinediyl, where one or two H atoms may be replaced by F, 2,5-pyrimidinediyl, where one or two H atoms may be replaced by F, trans-1,4-cyclohexylene, where one or two H atoms may be replaced by -CN and/or $-CH_3$, or 1,3,4-thiadiazole-2,5-diyl, |

| | |
|---|---|
| $M^1$ and $M^2$ | are identical or different and are -CO-O-, -O-CO-, $-CH_2-O-$, $-O-CH_2-$ or $-CH_2-CH_2-$, |
| a, b, c, d and e | are zero or one. |

**6.** A ferroelectric, smectic liquid-crystal mixture as claimed in claim 5, which comprises at least three compounds from groups I to M.

**7.** A ferroelectric, smectic liquid-crystal mixture as claimed in claim 5 or 6, which comprises compounds from groups J, K, L and M.

**8.** A method of using a smectic liquid-crystal mixture as claimed in one or more of claims 1 to 7 in an electrooptical switching and/or display device.

**9.** An electrooptical switching and/or display device, comprising a smectic liquid-crystal mixture as claimed in one or more of claims 1 to 7.

**Revendications**

**1.** Mélanges de cristaux liquides smectiques composés de

A. au moins un composé de formule (I)

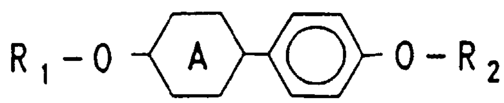

(I)

dans laquelle

$R^1$, $R^2$, identiques ou différents, représentent un groupe alkyle linéaire ou ramifié avec 1 à 18, respectivement 3 à 18 atomes de carbone, un des groupes $CH_2$ voisin de l'oxygène pouvant être remplacé aussi par -CO,

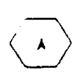 : 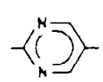 ou 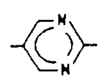

et/ou
au moins un composé de formule (II)

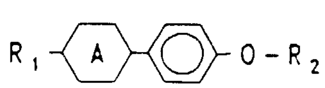

(II)

dans laquelle

$R^1$, $R^2$, identiques ou différents, représentent un groupe alkyle linéaire ou ramifié avec 1 à 18, respectivement 3 à 18 atomes de carbone, un des groupes $CH_2$ voisin de l'oxygène pouvant être remplacé aussi par -CO ;

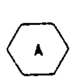 : 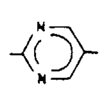 ou 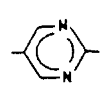

B. au moins un composé de formule (III)

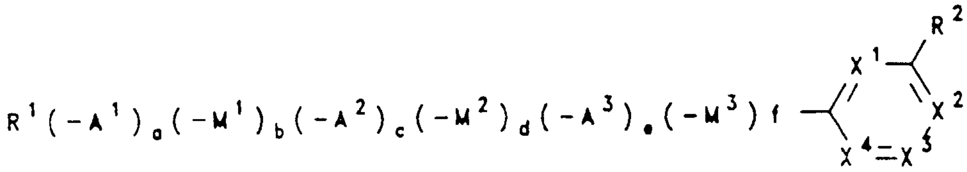

(III)

dans laquelle

$R^1$, $R^2$, identiques ou différents, représentent un radical alkyle linéaire ou ramifié avec 1 à 22, respectivement 3 à 22 atomes de carbone, un ou deux groupes $CH_2$ non voisins pouvant aussi être remplacés par -O-, -CO-, -CO-O-, -O-CO-, -O-CO-O- ou $-Si(CH_3)_2-$,

$A^1$, $A^2$, $A^3$, identiques ou différents, représentent 1,4-phénylène où 1 ou 2 atomes de H peuvent être remplacés par F, pyridine-2,5-diyle où 1 ou 2 atomes de H peuvent être remplacés par F, pyrimidine-2,5-diyle où 1 ou 2 atomes de H peuvent être remplacés par F, trans-1,4-cyclohexylène où 1 ou 2 atomes de H peuvent être remplacés par -CN et/ou $-CH_3$, (1,3,4)-thiadiazol-2,5-diyle,

et $A^1$

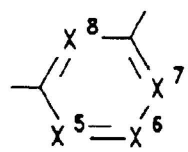

$M^1$, $M^2$, $M^3$, identiques ou différents, représentent -O-, -CO-O-, -O-CO-, $-CH_2-O-$, $-O-CH_2-$, $-CH_2-CH_2-$,

$X^1$, $X^2$, $X^3$, $X^4$, $X^5$, $X^6$, $X^7$, $X^8$, CH ou N, le nombre des atomes de N pour chaque cycle à 6 chaînons étant 0, 1 ou 2,

a, b, c, d, e, f valent 0 ou 1, à la condition que la somme de a + c + e soit 0, 1, 2 ou 3 ;

C. Composés de formule (IV)

$$R^1\text{-O-CO-O-}(\text{-}A^1)_a(\text{-}M^1)_b(\text{-}A^2)_c(\text{-}M^2)_d(\text{-}A^3)_e(\text{-O-})_f\text{-}R^2 \qquad \text{(IV)}$$

dans laquelle

$R^1$, $R^2$, identiques ou différents, représentent un groupe alkyle linéaire ou ramifié avec 1 à 22, respectivement 3 à 22 atomes de carbone,

$A^1$, $A^2$, $A^3$, identiques ou différents, représentent 1,4-phénylène où 1 ou 2 atomes de H peuvent être remplacés aussi par F, pyrimidine-2,5-diyle où 1 ou 2 atomes de H peuvent être remplacés aussi par F, pyridine-2,5-diyle où 1 ou 2 atomes de H peuvent être remplacés aussi par F,

$M^1$, $M^2$, identiques ou différents, représentent -O-, -CO-, -CO-O-, -O-CO-, $-CH_2-O-$, $-O-CH_2-$ ou $-CH_2-CH_2-$,

a, b, c, d, e, f valent 0 ou 1, à la condition que la somme de a + c + e soit 1, 2 ou 3 ;

ainsi qu'au moins un composé des groupes D à H :

D. Composés de silicium de formule (V)

$$R^1(-A^1)_i(-M^1)_k(-A^2)_l(-M^2)_m(-A^3)_n-R^2 \qquad (V)$$

dans laquelle

- $R^1$ représente un groupe alkyle linéaire ou ramifié avec 1 à 22, respectivement 3 à 22 atomes de carbone, où un ou deux groupes $-CH_2-$ non voisins peuvent être remplacés par -O-, -CO-, -CO-O-, -O-CO- ou -O-CO-O-,
- $R^2$ représente un groupe alkyle linéaire ou ramifié avec 1 à 22, respectivement 3 à 22 atomes de carbone où un ou deux groupes $-CH_2-$ non voisins peuvent être remplacés par -O-, -CO-, -CO-O-, -O-CO- ou -O-CO-O-, à la condition qu'un groupe $CH_2$ non lié à l'oxygène soit remplacé par $-Si(CH_3)_2-$,
- $A^1$, $A^2$, $A^3$, identiques ou différents, représentent 1,4-phénylène où 1 ou 2 atomes de H peuvent être remplacés aussi par F, trans-1,4-cyclohexylène, pyridine-2,5-diyle où 1 ou 2 atomes de H peuvent être remplacés par F, pyrimidine-2,5-diyle où 1 ou 2 atomes de H peuvent être chacun remplacés par F, (1,3,4)-thiadiazol-2,5-diyle,
- $M^1$, $M^2$, identiques ou différents, représentent -CO-O-, -O-CO-, $-CH_2-O-$, $-O-CH_2-$,
- i, k, l, m, n valent 0 ou 1, à la condition que la somme de i + l + n = 2 ou 3 ;

E. Dérivés de l'hydroquinone de formule (VI)

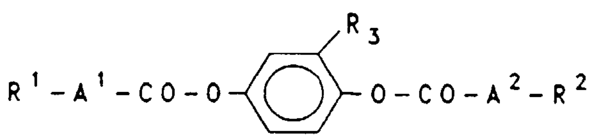

(VI)

dans laquelle

- $R^1$, $R^2$, identiques ou différents, représentent un groupe alkyle avec 1, respectivement 3 à 16, de préférence 1, respectivement 3 à 10 atomes de carbone où un ou deux groupes $-CH_2-$ non voisins peuvent être remplacés aussi par -O-, -CO-, -O-CO-, -CO-O-, -O-CO-O-,
- $R^3$ représente $-CH_3$, $CF_3$ ou $C_2H_5$,
- $A^1$, $A^2$, identiques ou différents,

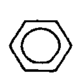 , 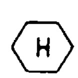 ;

F. Pyridylpyrimidines de formule (VII)

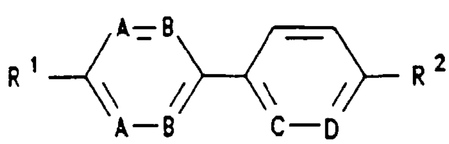

(VII)

dans laquelle

A est égal à N et B est égal à CH ou A est égal à CH et B est égal à N, C est égal à N et D est égal

à CH ou C est égal à CH et D est égal à N,

un ou deux groupes CH pouvant être remplacés par des groupes CF,

$R^1$, $R^2$, identiques ou différents, représentent un radical alkyle linéaire ou ramifié, avec 1 à 22, respectivement 3 à 22 atomes de carbone, un ou deux groupes $-CH_2-$ non voisins pouvant être remplacés aussi par -O-, -CO-, -CO-O-, -O-CO- ou -O-CO-O- ;

G. Phénylbenzoates de formule (VIII)

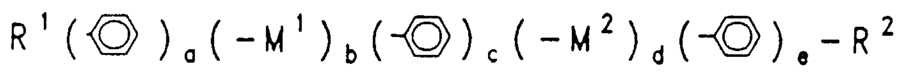 (VIII)

dans laquelle

$R^1$, $R^2$, identiques ou différents, représentent un radical alkyle linéaire ou ramifié avec 1 à 22, respectivement 3 à 22 atomes de carbone, un ou deux groupes $-CH_2-$ non voisins pouvant être remplacés aussi par -O-, -CO-, -CO-O-, -O-CO- ou -O-CO-O-,

$M^1$, $M^2$, identiques ou différents, représentent -CO-O-, -O-CO-,

a, b, c, d, e, f valent 0 ou 1, à la condition que la somme de a + c + e = 2 ou 3 et b + d = 1 ou 2 ;

et

H. Composés de formule (IX)

$$R^1(-A^1)_a(-M^1)_b(-A^2)_c(-M^2)_d(-A^3)_e(-M^3)_f(-A^4)-H \quad (IX)$$

dans laquelle

$R^1$ représente un radical alkyle linéaire ou ramifié avec 1 à 22, respectivement 3 à 22 atomes de carbone, un ou deux groupes $-CH_2-$ non voisins pouvant être remplacés aussi par -O-, -CO-, -CO-O-, -O-CO-, -O-CO-O- ou $-Si(CH_3)_2-$,

$A^1$, $A^2$, $A^3$, $A^4$, identiques ou différents, représentent 1,4-phénylène où un ou deux atomes de H peuvent être remplacés par F ou CN, pyridine-2,5-diyle où un ou deux atomes de H peuvent être remplacés par F, pyrimidine-2,5-diyle où un ou deux atomes de H peuvent être remplacés par F, trans-1,4-cyclohexylène, (1,3,4)-thiadiazol-2,5-diyle ou naphtalène-2,6-diyle,

$M^1$, $M^2$, $M^3$, identiques ou différents, représentent -CO-O-, -O-CO-, $-CH_2-O-$, $-O-CH_2-$ ou $-CH_2-CH_2-$,

a, b, c, d, e, f valent 0 ou 1, à la condition que la somme de a + c + e soit 0, 1, 2 ou 3.

**2.** Mélange de cristaux liquides smectiques selon la revendication 1, caractérisé en ce que le composant A est constitué de composés de formule (I) et/ou (II), dans lesquelles

$R^1$, $R^2$, identiques ou différents, représentent un groupe alkyle linéaire ou ramifié avec 1 à 12, respectivement 3 à 12 atomes de carbone, un groupe $CH_2$ voisin de l'oxygène pouvant être remplacé aussi par -CO-,

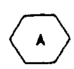 : 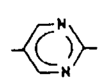

le composant B est constitué de composés de formule (III), dans laquelle

$R^1$, $R^2$, identiques ou différents, représentent un radical alkyle linéaire avec 1 à 14 atomes de carbone, un ou deux groupes $CH_2$ non voisins pouvant aussi être remplacés par -O-, -CO-, -CO-O-, -O-CO-, -O-CO-O- ou $-Si(CH_3)_2-$,

$A^1$, $A^2$, $A^3$, identiques ou différents, représentent 1,4-phénylène, pyrimidine-2,5-diyle, 1 ou 2 atomes de H

pouvant être remplacés par F, représentent aussi trans-1,4-cyclohexylène, (1,3,4)-thiadiazol-2,5-diyle.

et le composant C est constitué de composés de formule (IV), dans laquelle

$R^1$, $R^2$, identiques ou différents, représentent un radical alkyle linéaire ou ramifié avec 1 à 14 atomes de carbone, un ou deux groupes $CH_2$ non voisins pouvant aussi être remplacés par -O-, -CO-, -CO-O-, -O-CO-, -O-CO-O- ou $-Si(CH_3)_2-$,

$A^1$, $A^2$, $A^3$, identiques ou différents, représentent 1,4-phénylène, pyrimidine-2,5-diyle, 1 ou 2 atomes de H pouvant aussi être remplacés par F, trans-1,4-cyclohexylène, (1,3,4)-thiadiazol-2,5-diyle.

**3.** Mélange de cristaux liquides smectiques selon la revendication 1 ou 2, caractérisé en ce qu'il contient, au côté d'un composé pris dans chacun des groupes A, B et C, au moins un composé pris dans chacun des groupes D à H.

**4.** Mélange de cristaux liquides smectiques selon une ou plusieurs des revendications 1 à 3, caractérisé en ce que les composants A à H sont présents en quantités suivantes (en pourcentage en poids par rapport à la totalité du mélange) :

A : de 20 à 50 %,
B : de 5 à 10 %,
C : de 5 à 15%,
D : de 5 à 20 %,
E : de 2 à 5 %,
F : de 2 à 5 %,
G : de 2 à 20 %,
H : de 5 à 20 %,

**5.** Mélange de cristaux liquides ferroélectriques composé d'au moins un composé pris dans chacun des groupes A, B et C, d'au moins un composé pris dans les groupes D à H, d'au moins un composé pris dans le groupe N : Composés macrocycliques de formule (XV)

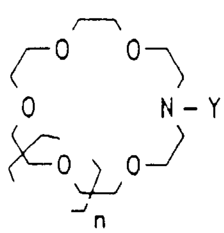

(XV)

avec

n : 0, 1
Y : -CO-(t-butyle), -CO-(adamantyle)

et d'au moins deux composés pris dans les groupes I à M :

I. Phénylbenzoates optiquement actifs de formule (X)

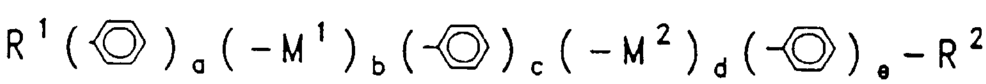

(X)

dans laquelle

$R^1$, $R^2$, identiques ou différents, représentent un radical alkyle linéaire ou ramifié avec 1 à 22, respectivement 3 à 22 atomes de carbone, un ou deux groupes $CH_2$ non voisins pouvant être remplacé aussi par -O-, -CO-, -CO-O-, -O-CO- ou -O-CO-O-, et dans laquelle au moins l'un des radicaux $R^1$, $R^2$ représente un groupe alkyle ramifié optiquement actif,

$M^1$, $M^2$, identiques ou différents, représentent -CO-O-, -O-CO- ou une liaison simple,

a, b, c, d, e valent 0 ou 1, à la condition que la somme de a + c + e soit 2 ou 3 et b + d soit 1 ou 2.

J. Ethers d'oxirane optiquement actifs de formule (XI)

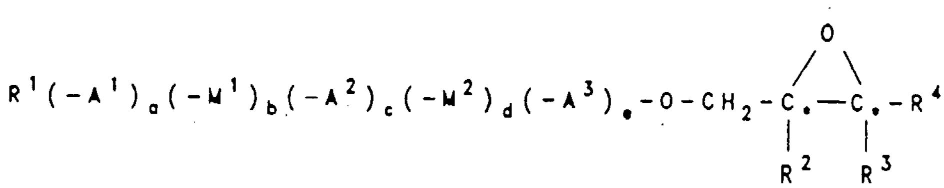

(XI)

dans laquelle les symboles et les indices ont les significations suivantes

* centre chiral

$R^1$ représente un radical alkyle linéaire ou ramifié avec 1 à 22, respectivement 3 à 22 atomes de carbone, un ou deux groupes $-CH_2-$ non voisins pouvant aussi être remplacés par -O-, -CO-, -CO-O-, -O-CO-, -O-CO-O- ou $-Si(CH_3)_2-$,

ou le groupe optiquement actif ci-après,

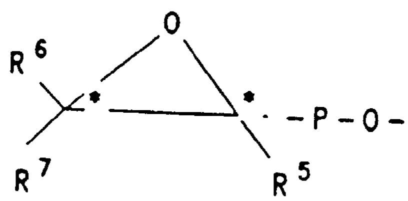

$R^2$, $R^3$, $R^4$, $R^5$, $R^6$, $R^7$, identiques ou différents, représentent H ou un radical alkyle linéaire ou ramifié avec 1 à 16, respectivement 3 à 16 atomes de carbone,

P représente $-CH_2-$ ou -CO-,

$A^1$, $A^2$, $A^3$, identiques ou différents, représentent 1,4-phénylène où 1 ou 2 atomes de H peuvent être remplacés par F, pyridine-2,5-diyle où 1 ou 2 atomes de H peuvent être remplacés par F, pyrimidine-2,5-diyle où 1 ou 2 atomes de H peuvent être remplacés aussi par F, trans-1,4-cyclohexylène, dont 1 ou 2 atomes de H peuvent être remplacés par -CN et/ou $-CH_3$, (1,3,4)-thiadiazol-2,5-diyle,

$M^1$, $M^2$, identiques ou différents, représentent -CO-O-, -O-CO-, $-CH_2-O-$, $-O-CH_2-$, $-CH_2-CH_2-$,

a, b, c, d, e valent 0 ou 1 ;

K. Esters d'oxiranne optiquement actifs de formule (XII)

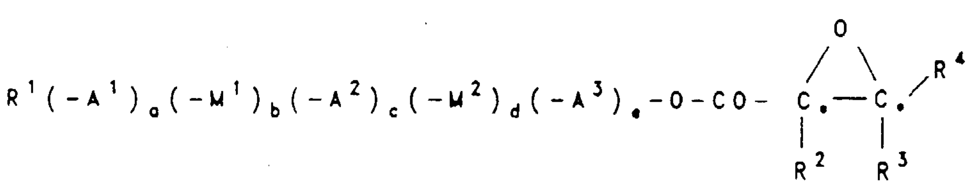

(XII)

dans laquelle les symboles et les indices ont les significations suivantes

* centre chiral

$R^1$ représente un radical alkyle linéaire ou ramifié avec 1 à 22, respectivement 3 à 22 atomes de carbone, un ou deux groupes $-CH_2-$ non voisins pouvant aussi être remplacés par -O-, -CO-, -CO-O-, -O-CO-, -O-CO-O- ou $-Si(CH_3)_2-$,

$R^2$, $R^3$, $R^4$, identiques ou différents, représentent H ou un radical alkyle linéaire ou ramifié avec 1 à 16 atomes de carbone,

$A^1$, $A^2$, $A^3$, identiques ou différents, représentent 1,4-phénylène où 1 ou 2 atomes de H peuvent être remplacés par F, pyridine-2,5-diyle où 1 ou 2 atomes de H peuvent être remplacés par F, pyrimidine-2,5-diyle où 1 ou 2 atomes de H peuvent être remplacés aussi par F, trans-1,4-cyclohexylène, dont 1 ou 2 atomes de H peuvent être remplacés par -CN et/ou $-CH_3$, (1,3,4)-thiadiazol-2,5-diyle,

$M^1$, $M^2$, identiques ou différents, représentent -CO-O-, -O-CO-, $-CH_2-O-$, $-O-CH_2-$, $-CH_2-CH_2-$,

a, b, c, d, e valent 0 ou 1 ;

L. Ethers de dioxolanne optiquement actifs de formule (XIII)

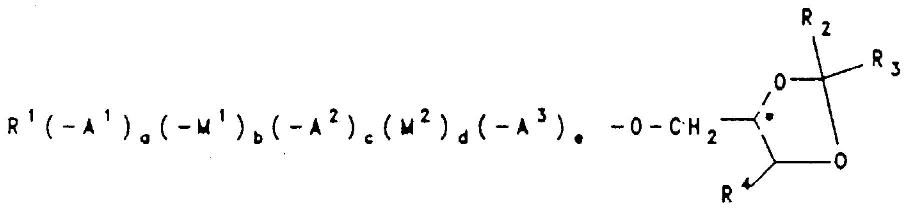
(XIII)

dans laquelle les symboles et les indices ont les significations suivantes

* centre chiral

$R^1$ représente un radical alkyle avec 1 à 22, respectivement 3 à 22 atomes de carbone, un ou deux groupes $-CH_2-$ non voisins pouvant aussi être remplacés par -O-, -CO-, -CO-O-, -O-CO-, -O-CO-O- ou $-Si(CH_3)_2-$,

$R^2$, $R^3$, $R^4$, identiques ou différents, représentent H ou un radical alkyle linéaire ou ramifié avec 1 à 16 atomes de carbone, $R^2$ et $R^3$ ensemble pouvant aussi représenter $-(CH_2)_5$,

$A^1$, $A^2$, $A^3$, identiques ou différents, représentent 1,4-phénylène où 1 ou 2 atomes de H peuvent être remplacés par F, pyridine-2,5-diyle où 1 ou 2 atomes de H peuvent être remplacés par F, pyrimidine-2,5-diyle où 1 ou 2 atomes de H peuvent être remplacés aussi par F, trans-1,4-cyclohexylène, dont 1 ou 2 atomes de H peuvent être remplacés par -CN et/ou $-CH_3$, (1,3,4)-thiadiazol-2,5-diyle,

$M^1$, $M^2$, identiques ou différents, représentent -CO-O-, -O-CO-, $-CH_2-O-$, $-O-CH_2-$, $-CH_2-CH_2-$,

a, b, c, d, e valent 0 ou 1 ;

M. Esters de dioxolanne optiquement actifs de formule (XIV)

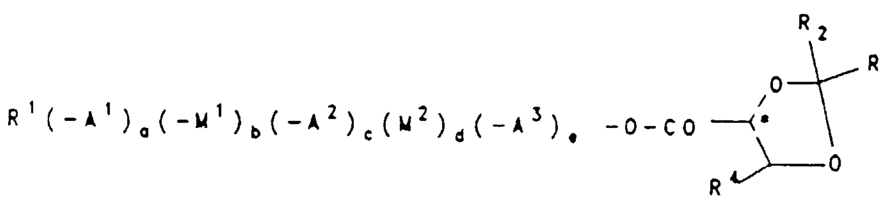
(XIV)

dans laquelle

$R^1$ représente un radical alkyle avec 1 à 22, respectivement 3 à 22 atomes de carbone, un ou deux groupes $-CH_2-$ non voisins pouvant aussi être remplacés par -O-, -CO-, -CO-O-, -O-CO-, -O-CO-O- ou $-Si(CH_3)_2-$,

$R^2$, $R^3$, $R^4$, identiques ou différents, représentent H ou un radical alkyle linéaire ou ramifié avec 1 à 16 atomes de carbone, $R^2$ et $R^3$ ensemble pouvant aussi représenter $-(CH_2)_5$,

$A^1$, $A^2$, $A^3$, identiques ou différents, représentent 1,4-phénylène où 1 ou 2 atomes de H peuvent être remplacés par F, pyridine-2,5-diyle où 1 ou 2 atomes de H peuvent être remplacés par F,

pyrimidine-2,5-diyle où 1 ou 2 atomes de H peuvent être remplacés aussi par F, trans-1,4-cyclohexylène, dont 1 ou 2 atomes de H peuvent être remplacés par -CN et/ou $-CH_3$, (1,3,4)-thiadiazol-2,5-diyle,

$M^1$, $M^2$, identiques ou différents, représentent -CO-O-, -O-CO-, $-CH_2-O-$, $-O-CH_2-$, $-CH_2-CH_2-$,

a, b, c, d, e valent 0 ou 1 ;

**6.** Mélange de cristaux liquides smectiques ferroélectriques selon la revendication 5, caractérisé en ce qu'il contient au moins trois composés pris dans les groupes I à M.

**7.** Mélange de cristaux liquides smectiques ferroélectriques selon la revendication 5 ou 6, caractérisé en ce qu'il contient des composés pris dans les groupes J, K, L et M.

**8.** Utilisation de mélanges de cristaux liquides smectiques selon une ou plusieurs des revendications 1 à 7 dans des dispositifs électrooptiques de commutation et d'affichage.

**9.** Dispositif électrooptique d'affichage et de commutation contenant un mélange de cristaux liquides smectiques selon une ou plusieurs des revendications 1 à 7.